# EUROPÄISCHE PATENTSCHRIFT

(11) **EP 0 823 505 B1**
(45) Veröffentlichungstag und Bekanntmachung des Hinweises auf die Patenterteilung: **08.03.2000**
(21) Anmeldenummer: 97810440.4
(22) Anmeldetag: 03.07.1997
(51) Int. Cl.: D06P 1/39, D06P 3/16, D06P 3/24, C09B 67/22, C09B 1/34, C09B 1/24

(54) **Verfahren zum Trichromie-Färben oder -Bedrucken**
Process for trichromic dyeing or printing
Procédé pour la teinture ou l'impression par trichromie

(30) Priorität: 12.07.1996 CH 175796
(43) Veröffentlichungstag der Anmeldung: 11.02.1998
(73) Patentinhaber: Ciba Specialty Chemicals Holding Inc., 4057 Basel (CH)
(72) Erfinder: Adam, Jean-Marie, 68300 Rosenau (FR); Casi, Francine, 68440 Enschentzwiller (FR)

(56) Entgegenhaltungen:
- EP-A- 0 387 201
- EP-A- 0 425 434
- EP-A- 0 524 148
- EP-A- 0 595 768
- EP-A- 0 658 605
- DE-A- 4 031 650
- GB-A- 799 732

## Beschreibung

Die vorliegende Erfindung betrifft ein Verfahren zum Trichromie-Färben oder -Bedrucken von natürlichen und synthetischen Polyamidfasermaterialien.

Die der vorliegenden Erfindung zugrundeliegende Aufgabe war es, ein Verfahren zum Färben oder Bedrucken von natürlichen und synthetischen Polyamidfasermaterialien mit zur Kombination nach dem Trichromie-Prinzip geeigneten Farbstoffen zu finden.

Es wurde nun gefunden, dass man diese Aufgabe erfindungsgemäss durch das nachfolgend beschriebene Verfahren lösen kann. Die so erhaltenen Färbungen genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus.

Gegenstand der vorliegenden Erfindung ist ein Verfahren zum Trichromie-Färben oder -Bedrucken von natürlichem oder synthetischem Polyamidfasermaterial, welches dadurch gekennzeichnet ist, dass man
mindestens einen gelb- oder orangefärbenden Farbstoff der Formel (1) 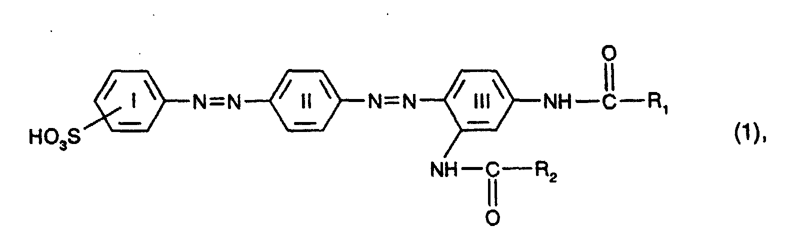 worin
R₁ und R₂ unabhängig voneinander gegebenenfalls durch Hydroxy, C₁-C₄-Alkoxy oder Halogen substituiertes C₁-C₄-Alkyl oder C₁-C₄-Alkoxy;
gegebenenfalls durch C₁-C₄-Alkyl, C₁-C₄-Alkoxy oder Halogen substituiertes Phenyl oder Phenoxy; oder
ein Rest der Formel -N(R₃)R₄ sind, wobei R₃ und R₄ unabhängig voneinander Wasserstoff, C₁-C₄-Alkyl oder gegebenenfalls im Alkylteil durch Hydroxy oder C₁-C₄-Alkoxy weitersubstituiertes C₂-C₄-Alkanoyl sind; und
die Benzolringe I, II und III der Farbstoffe der Formel (1) gegebenenfalls durch C₁-C₄-Alkyl, C₁-C₄-Alkoxy, C₂-C₄-Alkanoylamino, Ureido oder Halogen weitersubstituiert sind;
zusammen mit mindestens einem rotfärbenden Farbstoff der Formeln (2) und (3) 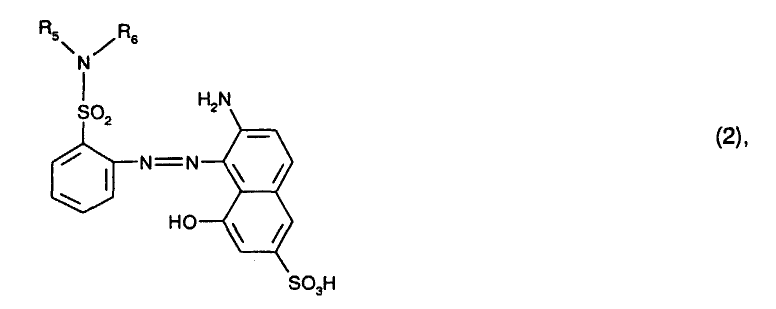
worin R₅ C₁-C₆-Alkyl, Phenyl oder Cyclohexyl und R₆ C₁-C₆-Alkyl ist, oder die Reste R₅ und R₆ zusammen mit dem sie verbindenden Stickstoffatom einen Azepinylring bilden, 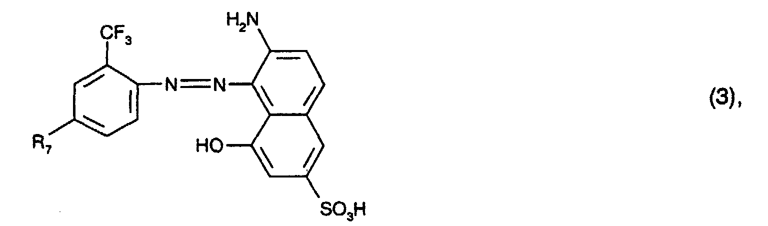
worin R₇ Wasserstoff, Halogen oder C₂-C₄-Alkanoylamino bedeutet;
und zusammen mit mindestens einem der blaufärbenden Farbstoffe der Formeln (4), (5) und (6) 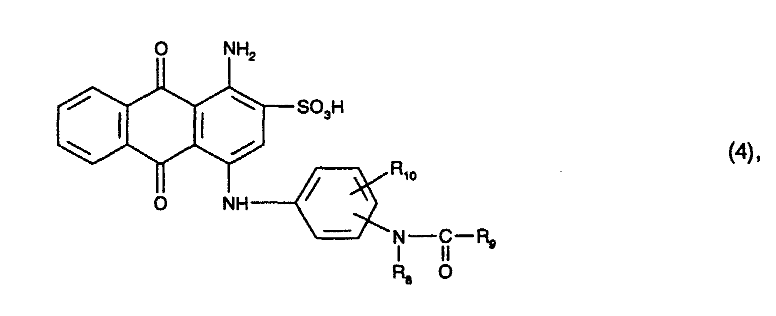
worin R₈ Wasserstoff oder C₁-C₄-Alkyl ist und
R₉ gegebenenfalls durch Hydroxy, C₁-C₄-Alkoxy oder Halogen substituiertes C₁-C₄-Alkyl oder C₁-C₄-Alkoxy; oder Amino bedeutet und
R₁₀ Wasserstoff, C₁-C₄-Alkyl oder C₁-C₄-Alkoxy ist, 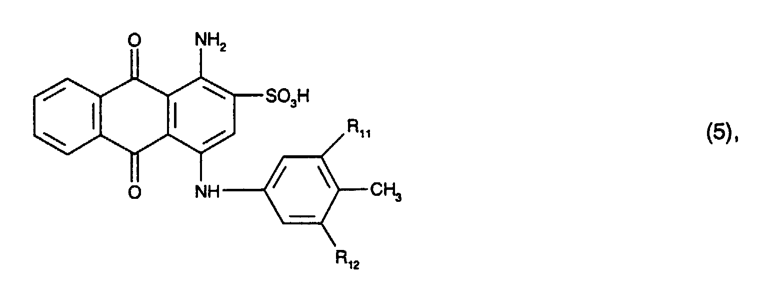
worin R₁₁ Wasserstoff oder Methyl ist und R₁₂ ein C₂₋₄-Hydroxyalkylsulphamoylrest bedeutet, 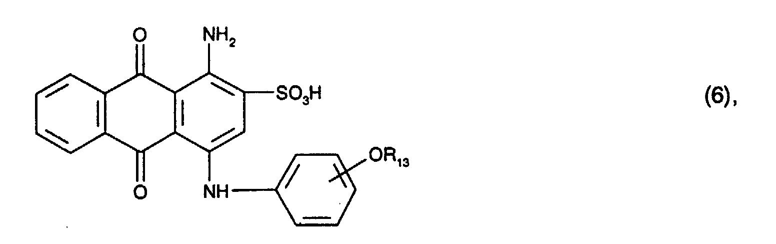
worin R₁₃ C₁-C₄-Alkyl ist;
verwendet.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

In der deutschen Offenlegungsschrift DE 40 31 650 sowie in den europäischen Patentanmeldungen EP 387201, EP 425434 und EP 524148 werden Verfahren zum Trichromiefärben bzw. dazu verwendbare Farbstoffmischungen beschrieben, in denen Farbstoffe Verwendung finden, die den Verbindungen der Formeln (2)/(3) (rote Monoazofarbstoffe), (4)/(5)/(6) (blaue Anthrachinon verbindungen) sowie (7) (gelbe bzw. orange Monoazo verbindungen) nahe kommen.

Den in DE 4031650 beschriebenen Disazo verbindungen fehlen die anmeldungsgemäßen Carbonylaminogruppen.

Die EP 595768 beschreibt Farbstoffe der Formel (1) der vorliegenden Anmeldung, die zum Färben von stickstoffhaltigen oder hydroxylgruppenhaltigen Fasermaterialien eingesetzt werden.

Als C₁-C₄-Alkyl kommen für R₁, R₂, R₃, R₄, R₈, R₉, R₁₀, R₁₃ sowie als Substituent der Benzolringe I, II und III der Farbstoffe der Formel (1) unabhängig voneinander z.B. Methyl, Aethyl, Propyl, Isopropyl, Butyl, sek.-Butyl, tert.-Butyl oder Isobutyl, insbesondere Methyl oder Aethyl, in Betracht. Die Reste R₁, R₂ und R₉ in der Bedeutung als C₁-C₄-Alkyl können durch Hydroxy, Halogen wie z.B. Brom oder vorzugsweise Chlor, oder insbesondere durch C₁-C₄-Alkoxy, wie z.B. Aethoxy oder vorzugsweise Methoxy, weitersubstituiert sein. Als Beispiel für entsprechende substituierte Reste sei der Methoxymethylrest genannt.

Als C₁-C₆-Alkyl kommen für R₅ und R₆ z.B. Methyl, Aethyl, Propyl, Isopropyl, Butyl, Isobutyl, sek.-Butyl, tert.-Butyl oder geradkettiges oder verzweigtes Pentyl oder Hexyl in Betracht. Bevorzugt sind Methyl und Aethyl, insbesondere Methyl.

Als C₁-C₄-Alkoxy kommen für R₁, R₂, R₉, R₁₀ sowie als Substituent der Benzolringe I, II und III der Farbstoffe der Formel (1) unabhängig voneinander z.B. Methoxy, Aethoxy, Propoxy, lsopropoxy, Butoxy oder lsobutoxy, insbesondere Methoxy oder vorzugsweise Aethoxy, in Betracht. Die Reste R₁, R₂ und R₉ in der Bedeutung als C₁-C₄-Alkoxy können durch Hydroxy, Halogen wie z.B. Brom oder vorzugsweise Chlor, oder insbesondere durch C₁-C₄-Alkoxy, wie z.B. Methoxy oder Aethoxy, weitersubstituiert sein. Bevorzugt sind die entsprechenden unsubstituierten Reste.

Als C₂-C₄-Alkanoyl kommen für R₃ und R₄ unabhängig voneinander z.B. Propionyl oder insbesondere Acetyl in Betracht. Die Reste R₃ und R₄ können in der Bedeutung als C₂-C₄-Alkanoyl durch Hydroxy oder insbesondere C₁-C₄-Alkoxy, wie z.B. Methoxy oder Aethoxy, weitersubstituiert sein.

Als Phenyl oder Phenoxy kommen für R₁ und R₂ neben den entsprechenden unsubstituierten Resten die durch C₁-C₄-Alkyl, wie Methyl, Aethyl, Propyl, Isopropyl, Butyl, sek.-Butyl, tert.-Butyl oder Isobutyl, C₁-C₄-Alkoxy, wie z.B. Methoxy, Äthoxy, Propoxy, lsopropoxy, Butoxy oder lsobutoxy, oder durch Halogen, wie z.B. Fluor, Brom oder insbesondere Chlor, substituierten Reste in Betracht. Bevorzugt sind hierbei die entsprechenden Phenylreste.

Als Halogen kommt für R₇ sowie als Substituent der Benzolringe I, II und III der Farbstoffe der Formel (1) beispielsweise Brom oder insbesondere Chlor in Betracht.

Als C₂-C₄-Alkanoylamino kommt für R₇ sowie als Substituent der Benzolringe I, II und III der Farbstoffe der Formel (1) insbesondere Acetylamino in Betracht.

Bilden die Reste R₅ und R₆ zusammen mit dem sie verbindenden Stickstoffatom einen Azepinylring so handelt es sich um den Rest der Formel

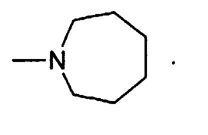

Als C₂₋₄-Hydroxyalkylsulphamoylrest kommt für R₁₂ insbesondere ein Rest der Formel -SO₂-NH-CH₂-CH₂-OH in Betracht.

Als mögliche weitere Substituenten der Benzolringe I, II und III der Farbstoffe der Formel (1) kommen bevorzugt C₁-C₄-Alkyl, C₁-C₄-Alkoxy, Ureido oder Halogen, insbesondere C₁-C₄-Alkyl, C₁-C₄-Alkoxy oder Ureido und vorzugsweise C₁-C₄-Alkyl oder C₁-C₄-Alkoxy in Betracht. Besonders bevorzugt enthalten die Benzolringe I, II und III der Farbstoffe der Formel (1) keine weiteren Substituenten.

Von besonderem Interesse als Farbstoffe der Formel (1) sind solche der Formel 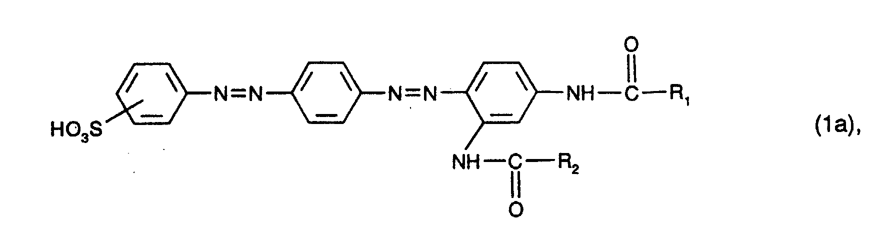 worin
R₁ und R₂ die oben angegebenen Bedeutungen haben.
R₃ ist bevorzugt Wasserstoff oder C₁-C₄-Alkyl, insbesondere Wasserstoff.
R₄ ist bevorzugt Wasserstoff, C₁-C₄-Alkyl oder gegebenenfalls im Alkylteil durch C₁-C₄-Alkoxy weitersubstituiertes C₂-C₄-Alkanoyl, insbesondere Wasserstoff oder im Alkylteil gegebenenfalls durch C₁-C₄-Alkoxy weitersubstituiertes C₂-C₄-Alkanoyl. Besonders bevorzugt ist R₄ Wasserstoff.

Ganz besonders bevorzugt sind R₃ und R₄ Wasserstoff.
R₁ und R₂ sind vorzugsweise unabhängig voneinander gegebenenfalls durch Hydroxy, C₁-C₄-Alkoxy oder Halogen substituiertes C₁-C₄-Alkyl oder C₁-C₄-Alkoxy; oder ein Rest der Formel -N(R₃)R₄, wobei für R₃ und R₄ die oben angegebenen Bedeutungen und Bevorzugungen gelten. Vorzugsweise sind hierbei R₃ Wasserstoff und R₄ Wasserstoff oder im Alkylteil durch C₁-C₄-Alkoxy weitersubstituiertes C₂-C₄-Alkanoyl, insbesondere Wasserstoff.

Bevorzugt sind R₁ und R₂ unabhängig voneinander C₁-C₄-Alkoxy; gegebenenfalls durch C₁-C₄-Alkoxy substituiertes C₁-C₄-Alkyl; oder ein Rest der Formel -N(R₃)R₄, wobei für R₃ und R₄ die oben angegebenen Bedeutungen und Bevorzugungen gelten. Vorzugsweise sind hierbei R₃ Wasserstoff und R₄ Wasserstoff oder im Alkylteil durch C₁-C₄-Alkoxy weitersubstituiertes C₂-C₄-Alkanoyl, insbesondere Wasserstoff.

R₁ ist besonders bevorzugt C₁-C₄-Alkyl oder C₁-C₄-Alkoxy, insbesondere C₁-C₄-Alkoxy.

Ganz besonders bevorzugt ist R₁ Methyl, Aethyl, Methoxy oder Aethoxy, insbesondere Methoxy oder Aethoxy.

R₂ ist besonders bevorzugt C₁-C₄-Alkyl oder Amino, insbesondere Methyl, Aethyl oder Amino.

Von besonderem Interesse sind Farbstoffe der Formel (1), vorzugsweise solche der Formel (1a), worin R₁ C₁-C₄-Alkyl oder C₁-C₄-Alkoxy, insbesondere C₁-C₄-Alkoxy, ist, und R₂ C₁-C₄-Alkyl oder Amino ist.

Von ganz besonderem Interesse sind Farbstoffe der Formel (1), vorzugsweise solche der Formel (1a), worin R₁ Methyl, Aethyl, Methoxy oder Aethoxy, insbesondere Methoxy oder Aethoxy, ist, und R₂ Methyl, Aethyl oder Amino, insbesondere Methyl oder Amino, ist.

Die Sulfogruppe in den Farbstoffen der Formel (1) und insbesondere in den Farbstoffen der Formel (1a) ist vorzugsweise in para-Stellung, relativ zur Azogruppe, gebunden.

Gemäss einer bevorzugten Ausführungsform des erfindungsgemässen Verfahrens verwendet man als gelb- oder orangefärbende Farbstoffe eine Farbstoffmischung aus mindestens einem gelb- oder orangefärbenden Farbstoff der Formel (1), und mindestens einem gelb- oder orangefärbenden Farbstoff der Formel (7) 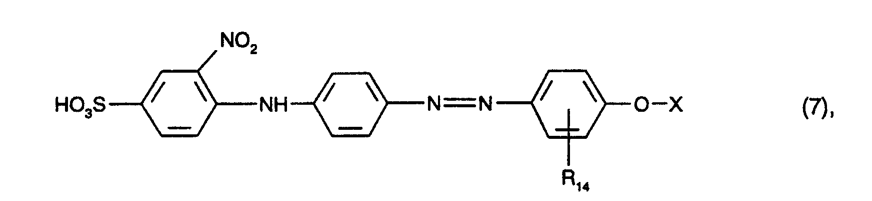 worin
R₁₄ Wasserstoff, C₁-C₄-Alkyl, C₁-C₄-Alkoxy oder Halogen und
X Wasserstoff oder C₁-C₄-Alkyl ist. Von besonderem Interesse sind hierbei Farbstoffe der Formel (1a).
R₁₄ ist bevorzugt Wasserstoff, C₁-C₄-Alkyl, insbesondere Methyl, oder C₁-C₄-Alkoxy, insbesondere Methoxy. Besonders bevorzugt ist R₁₄ Wasserstoff oder C₁-C₄-Alkyl, insbesondere Wasserstoff oder Methyl. Der Rest R₁₄ ist vorzugsweise in ortho-Stellung, relativ zur Azogruppe, gebunden.

Bei dem Rest X handelt es sich bevorzugt um Wasserstoff oder Methyl, insbesondere um Wasserstoff.

Bevorzugt sind solche Farbstoffe der Formel (7), worin R₁₄ Wasserstoff oder C₁-C₄-Alkyl, insbesondere Wasserstoff oder Methyl, ist, und X Wasserstoff oder Methyl, insbesondere Wasserstoff, ist.

Vorzugsweise verwendet man als gelb- oder orangefärbende Farbstoffe der Formel (7) eine Mischung der Farbstoffe der Formeln 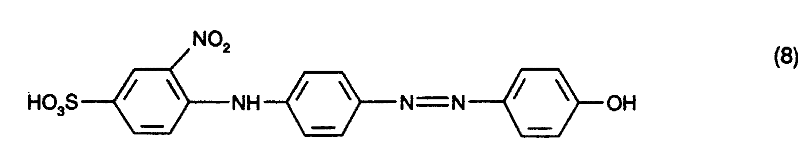 und 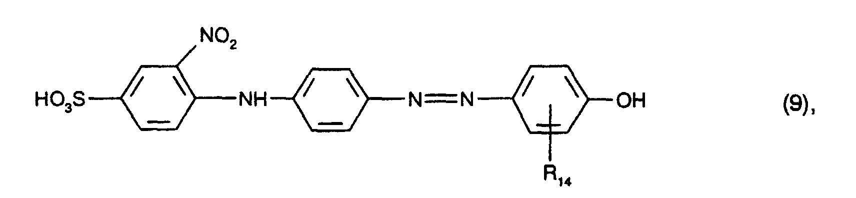 wobei für R₁₄ die oben angegebenen Bedeutungen und Bevorzugungen gelten. Vorzugsweise ist R₁₄ C₁-C₄-Alkyl, insbesondere Methyl. Der Rest R₁₄ ist hierbei bevorzugt in ortho-Stellung, relativ zur Azogruppe, gebunden.

Der Rest R₅ ist bevorzugt Phenyl oder Cyclohexyl, insbesondere Cyclohexyl.

Der Rest R₆ ist bevorzugt Methyl oder Aethyl, insbesondere Methyl.

Weiterhin können die Reste R₅ und R₆ zusammen mit dem sie verbindenden Stickstoffatom einen Azepinylring bilden.

Der Rest R₇ ist bevorzugt Wasserstoff, Chlor oder Acetylamino, insbesondere Acetylamino.

Der Rest R₈ ist bevorzugt Wasserstoff.

Der Rest R₉ ist bevorzugt Methyl, Aethyl, durch Methoxy oder Aethoxy substituiertes Methyl oder Aethyl, oder Amino, insbesondere Methyl, Aethyl oder Methoxymethyl und vorzugsweise Aethyl.

Der Rest R₁₀ ist bevorzugt Wasserstoff, Methyl oder Methoxy, insbesondere Wasserstoff.

Der Rest R₁₁ ist bevorzugt Methyl.

Der Rest R₁₃ ist bevorzugt Methyl oder Aethyl, insbesondere Methyl.

Als rotfärbende Farbstoffe der Formel (2) verwendet man bevorzugt solche, worin R₅ Phenyl oder Cyclohexyl und R₆ Methyl oder Aethyl ist, oder die Reste R₅ und R₆ zusammen mit dem sie verbindenden Stickstoffatom einen Azepinylring bilden.

Besonders bevorzugt verwendet man als rotfärbende Farbstoffe der Formel (2) solche, worin R₅ Cyclohexyl und R₆ Methyl ist, oder die Reste R₅ und R₆ zusammen mit dem sie verbindenden Stickstoffatom einen Azepinylring bilden, insbesondere solche, worin R₅ Cyclohexyl und R₆ Methyl ist.

Als rotfärbende Farbstoffe verwendet man bevorzugt solche der Formel (2), für welche die oben angegebenen Bedeutungen und Bevorzugungen gelten.

Als blaufärbende Farbstoffe der Formel (4) verwendet man bevorzugt solche, worin der Rest der Formel -N(R₈)-CO-R₉ in meta- oder para-Stellung, insbesondere in meta-Stellung, relativ zur Aminogruppe, gebunden ist. Hierbei ist vorzugsweise R₈ Wasserstoff und R₉ Methyl, Aethyl, durch Methoxy oder Aethoxy substituiertes Methyl oder Aethyl, oder Amino, insbesondere Methyl, Aethyl oder Methoxymethyl und vorzugsweise Aethyl. Der Rest R₁₀ ist hierbei bevorzugt Wasserstoff, Methyl oder Methoxy, insbesondere Wasserstoff.

Als blaufärbende Farbstoffe der Formel (5) verwendet man bevorzugt solche, worin R₁₂ ein Rest der Formel -SO₂-NH-CH₂-CH₂-OH ist. R₁₁ ist hierbei vorzugsweise Wasserstoff.

Als blaufärbende Farbstoffe der Formel (6) verwendet man bevorzugt solche, worin der Rest R₁₃ Methyl oder Aethyl und insbesondere Methyl ist.

Als blaufärbende Farbstoffe sind für das erfindungsgemässe Verfahren der Farbstoff der Formel (4) oder eine Mischung des Farbstoffs der Formel (4) mit mindestens einem Farbstoff der Formeln (5) und (6) bevorzugt. In einer weiteren bevorzugten Ausführungsform sind als blaufärbende Farbstoffe für das erfindungsgemässe Verfahren eine Mischung des Farbstoffs der Formel (5) mit einem Farbstoff der Formel (6) interessant. Von besonderem Interesse sind Mischungen des Farbstoffs der Formel (4) mit einem Farbstoff der Formel (5). Hierbei sind insbesondere solche Farbstoffe der Formeln (4), (5) und (6) bevorzugt, worin R₈ Wasserstoff, R₉ Methyl, Aethyl, Methoxymethyl oder Amino, R₁₀ Wasserstoff, Methyl oder Methoxy, R₁₂ ein Rest der Formel -SO₂-NH-CH₂-CH₂-OH und R₁₃ Methyl oder Aethyl ist.

Eine bevorzugte Ausführungsform des erfindungsgemässen Verfahren ist dadurch gekennzeichnet, dass man
als roffärbenden Farbstoff einen Farbstoff der Formel (2) verwendet, worin R₅ Cyclohexyl und R₆ Methyl ist, oder die Reste R₅ und R₆ zusammen mit dem sie verbindenden Stickstoffatom einen Azepinylring bilden, und
als blaufärbenden Farbstoff einen Farbstoff der Formel (4) oder insbesondere eine Mischung des Farbstoffs der Formel (4) mit mindestens einem Farbstoff der Formeln (5) und (6), oder eine Mischung des Farbstoffs der Formel (5) mit einem Farbstoff der Formel (6) verwendet, wobei R₈ Wasserstoff, R₉ Methyl, Aethyl, Methoxymethyl oder Amino, R₁₀ Wasserstoff, Methyl oder Methoxy, R₁₂ ein Rest der Formel -SO₂-NH-CH₂-CH₂-OH und R₁₃ Methyl oder Aethyl ist. Hierbei gelten für die gelb- oder orangefärbenden Farbstoffe der Formel (1) bzw. die Mischungen der Farbstoffe der Formeln (1) und (7) die oben angegebenen Bedeutungen und Bevorzugungen. Vorteilhafterweise handelt es sich hierbei um Mischungen aus mindestens einem gelb- oder orangefärbenden Farbstoff der Formel (1a), worin R₁ und R₂ unabhängig voneinander C₁-C₄-Alkoxy; gegebenenfalls durch C₁-C₄-Alkoxy substituiertes C₁-C₄-Alkyl; oder Amino sind, und
mindestens einem gelb- oder orangefärbenden Farbstoff der Formel (7), worin R₁₄ Wasserstoff oder C₁-C₄-Alkyl und X Wasserstoff ist. Als gelb- oder orangefärbende Farbstoffe der Formel (7) verwendet man vorzugsweise eine Mischung der Farbstoffe der Formeln (8) und (9), wobei R₁₄ Methyl bedeutet. Als roffärbenden Farbstoff verwendet man vorzugsweise einen Farbstoff der Formel (2), worin R₅ Cyclohexyl und R₆ Methyl ist.

Eine ganz besonders bevorzugte Ausführungsform des erfindungsgemässen Verfahren ist dadurch gekennzeichnet, dass man
als roffärbenden Farbstoff einen Farbstoff der Formel (2) verwendet, worin R₅ Cyclohexyl und R₆ Methyl ist,
als blaufärbende Farbstoffe eine Mischung des Farbstoffs der Formel (4) mit einem Farbstoff der Formel (5) verwendet, wobei R₈ Wasserstoff, R₉ Methyl, Aethyl, Methoxymethyl oder Amino, R₁₀ Wasserstoff, Methyl oder Methoxy und R₁₂ ein Rest der Formel -SO₂-NH-CH₂-CH₂-OH ist, und
als gelb- oder orangefärbende Farbstoffe eine Farbstoffmischung aus mindestens einem Farbstoff der Formel (1a), worin R₁ C₁-C₄-Alkyl oder vorzugsweise C₁-C₄-Alkoxy und R₂ C₁-C₄-Alkyl oder Amino ist, einem Farbstoff der Formel (8) und einem Farbstoff der Formel (9), worin R₁₄ Methyl ist, verwendet.

Einen weiteren Gegenstand der vorliegenden Erfindung stellen Farbstoffmischungen dar, welche mindestens einen gelb- oder orangefärbenden Farbstoff der Formel (1) zusammen mit mindestens einem gelb- oder orangefärbenden Farbstoff der Formel (7) enthalten. Hierbei gelten für die Mischungen der Farbstoffe der Formel (1) und (7) sowie für die Farbstoffe der Formeln (1) und (7) die oben angegebenen Bedeutungen und Bevorzugungen.

Die Farbstoffmischungen der Farbstoffe der Formeln (1) und (7) können z.B. durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen z.B. durch Zerstäubungstrocknung der wässrigen Farbstoffmischungen hergestellt werden.

Die Farbstoffmischungen enthalten bevorzugt 5 bis 95 Gew.%, insbesondere 20 bis 95 Gew.-% und vorzugsweise 40 bis 95 Gew.% eines Farbstoffs der Formel (1), bezogen auf die Gesamtmenge der Farbstoffe der Formeln (1) und (7). Besonders bevorzugt enthalten die Farbstoffmischungen 50 bis 90 Gew.%, insbesondere 60 bis 90 Gew.-% eines Farbstoffs der Formel (1), bezogen auf die Gesamtmenge der Farbstoffe der Formeln (1) und (7).

Gegenstand der vorliegenden Erfindung sind auch Farbstoffe der Formel (4), worin
R₈ Wasserstoff oder C₁-C₄-Alkyl ist und
R₉ durch Hydroxy oder C₁-C₄-Alkoxy substituiertes C₁-C₄-Alkyl oder C₁-C₄-Alkoxy bedeutet und
R₁₀ C₁-C₄-Alkyl oder C₁-C₄-Alkoxy ist.

Die in dem erfindungsgemässen Verfahren zum Trichromie-Färben oder -Bedrucken verwendeten Farbstoffe der Formeln (1), (2), (3), (4), (5), (6) und (7) sind bekannt oder können in Analogie zu bekannten Farbstoffen hergestellt werden.

So können Farbstoffe der Formel (1) z.B. erhalten werden, indem man ein Amin der Formel 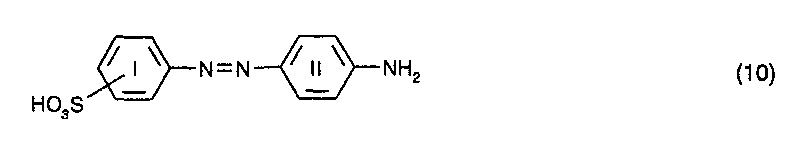 diazotiert, auf eine Kupplungskomponente der Formel 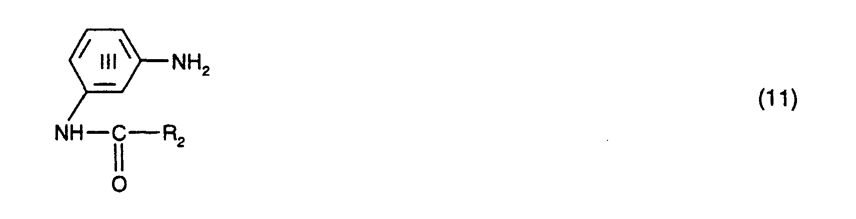 kuppelt und das erhaltene Reaktionsprodukt mit einer den Rest der Formel 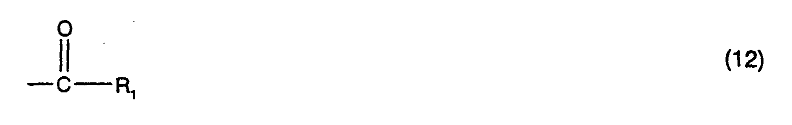 einführenden Verbindung umsetzt, wobei R₁ und R₂ die oben unter Formel (1) angegebenen Bedeutungen haben.

Die Diazotierung der Verbindung der Formel (10) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei 0 bis 10°C.

Die Kupplung auf die Kupplungskomponente der Formel (11) erfolgt in an sich bekannter Weise, bei sauren, neutralen bis schwach alkalischen pH-Werten, z.B. einem pH-Wert von 3 bis 7, und Temperaturen von beispielsweise -5 bis 30°C, vorzugsweise 0 bis 25°C.

Zur Einführung des Restes der Formel (12) können beispielsweise Verbindungen der Formel 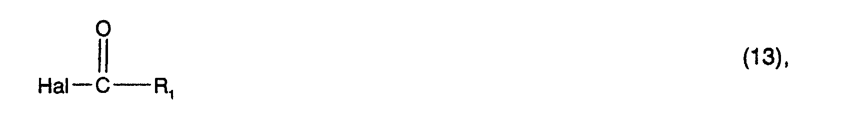 worin Hal Halogen, wie Chlor, Brom oder Jod, insbesondere Chlor, bedeutet, verwendet werden. Als Beispiele für Verbindungen der Formel (13) seien Acetylchlorid, Propionylchlorid, Methoxyacetylchlorid sowie Chlorameisensäureethylester genannt. Als weitere Beispiele für den Rest der Formel (12) einführende Verbindungen seien Essigsäureanhydrid und Propionsäureanhydrid genannt.

Die Einführung des Restes der oben genannten Formel (12) kann z.B. in dipolaren aprotischen Lösungsmitteln, wie z.B. Dimethylformamid oder Dimethylsulfoxid, oder in Wasser oder vorzugsweise in Pyridin erfolgen, bei einer Temperatur von beispielsweise 10 bis 80°C, insbesondere 10 bis 50°C.

Farbstoffe der Formel (7) können z.B. gemäss den aus der US-A-4,060,383 und der GB-A-1,454,475 bekannten Verfahren erhalten werden.

Die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die in dem erfindungsgemässen Verfahren verwendeten Farbstoffe können weitere Zusätze, wie z.B. Kochsalz oder Dextrin, enthalten.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren zum Trichromie-Färben oder -Bedrucken ist auch zum Färben aus Kurzflotten, wie z.B. bei Kontinuefärbeverfahren oder diskontinuierlichen und kontinuierlichen Schaumfärbeverfahren, geeignet.

Die Mengen, in denen die einzelnen Farbstoffe in den Färbebädern oder Druckpasten verwendet werden, können je nach der gewünschten Farbtiefe in weiten Grenzen schwanken, im allgemeinen haben sich Mengen von 0,01 bis 15 Gew.-%, insbesondere 0,01 bis 10 Gew.-%, bezogen auf das Färbegut bzw. die Druckpaste, als vorteilhaft erwiesen.

Vorzugsweise färbt man bei einem pH-Wert von 3 bis 7, insbesondere 4 bis 7. Das Flottenverhältnis kann innerhalb eines weiten Bereichs gewählt werden, z.B. von 1:5 bis 1:50, vorzugsweise 1:5 bis 1:30. Vorzugsweise färbt man bei einer Temperatur von 70 bis 110°C, insbesondere 80 bis 105°C.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, gute Nuancenkonstanz auch in verschiedenen Konzentrationen, gute Echtheiten und Löslichkeit sowie insbesondere durch sehr gute Kombinierbarkeit aus.

Das erfindungsgemässe Verfahren zum Trichromie-Färben oder -Bedrucken eignet sich zum Färben oder Bedrucken sowohl von natürlichen Polyamidmaterialien wie z.B. Wolle, wie insbesondere von synthetischen Polyamidmaterialien, wie z.B. Polyamid 6 oder Polyamid 6.6, und ist geeignet zum Färben oder Bedrucken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

Es werden egale Färbungen mit guten Allgemeinechtheiten, insbesondere guter Reib-, Nass-, Nassreib- und Lichtechtheit erhalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Zu 2000 Teilen entmineralisiertem Wasser wird bei Raumtemperatur 1 Teil eines Egalisierhilfsmittels (basierend auf dem Kondensationsprodukt aus einem höheren aliphatischen Amin und Ethylenoxid) gegeben. Anschliessend wird das Bad mit 4 Teilen Natriumdihydrogenphosphat und 0,6 Teilen Dinatriumhydrogenphosphat auf einen pH-Wert von 6 gestellt. Dann gibt man eine Mischung von
0,016 Teilen eines Farbstoffs, der in Form der freien Säure der Verbindung der Formel 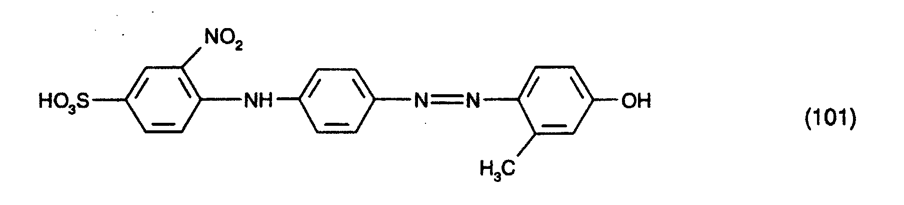 entspricht,
0,016 Teilen eines Farbstoffs, der in Form der freien Säure der Verbindung der Formel 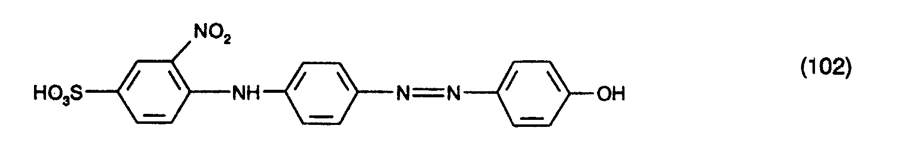 entspricht,
0,128 Teilen eines Farbstoffs, der in Form der freien Säure der Verbindung der Formel 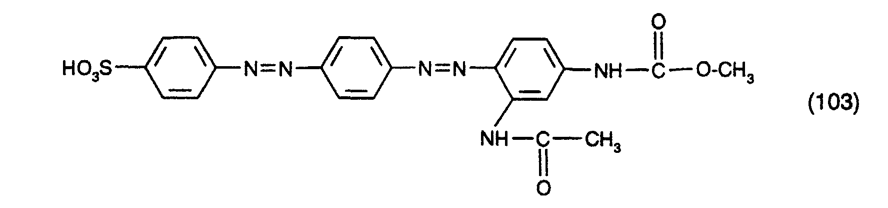 entspricht,
0,09 Teilen eines Farbstoffs, der in Form der freien Säure der Verbindung der Formel 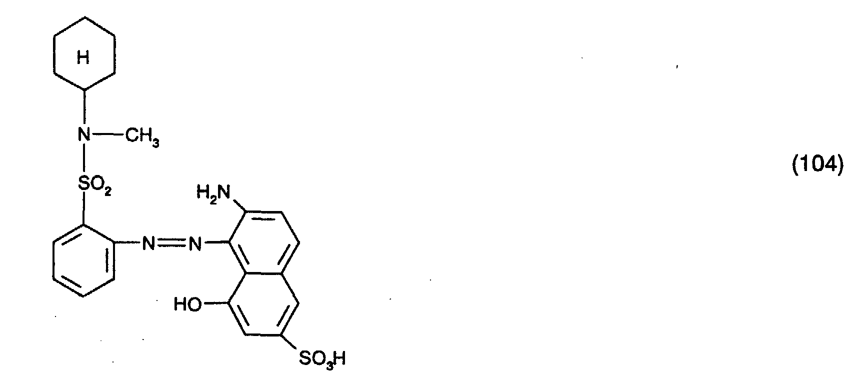 entspricht,
0,033 Teilen eines Farbstoffs, der in Form der freien Säure der Verbindung der Formel 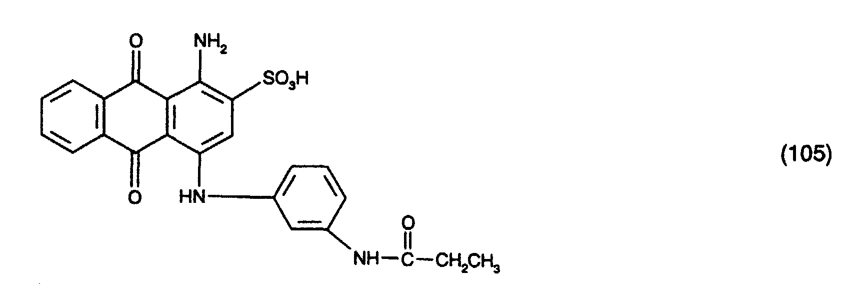 entspricht, und
0,098 Teilen eines Farbstoffs, der in Form der freien Säure der Verbindung der Formel 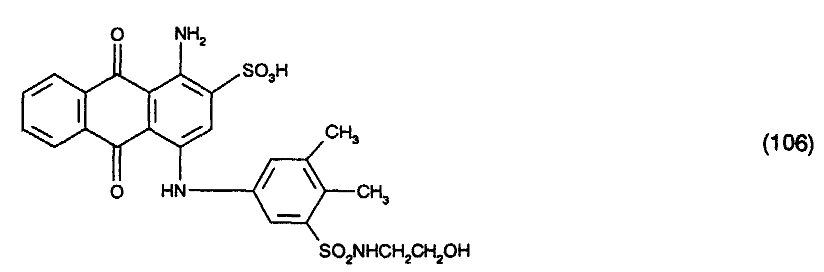 entspricht, zu.

In die erhaltene Farbstofflösung geht man mit 100 Teilen Polyamid-6.6 Fasermaterial (Helancatrikot) ein und erwärmt das Färbebad innerhalb von 45 Minuten auf eine Temperatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem beige-braunen Farbton gefärbtes Gewebe.

Beispiele 2 und 3: Verfährt man wie in Beispiel 1 angegeben, verwendet jedoch anstelle des Farbstoffs der Formel (103) eine äquimolare Menge eines der in der folgenden Tabelle 1 in Spalte 2 angegebenen Farbstoffe, so erhält man ebenfalls in einem beige-braunen Farbton gefärbtes Polyamidgewebe.

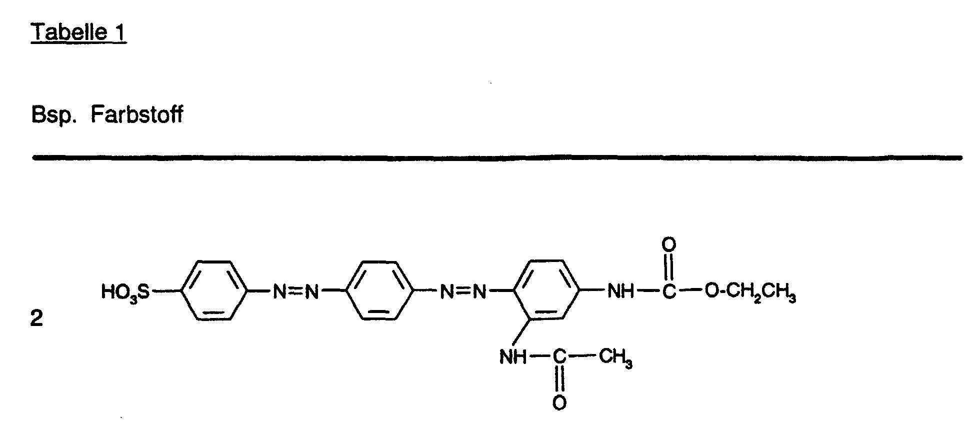

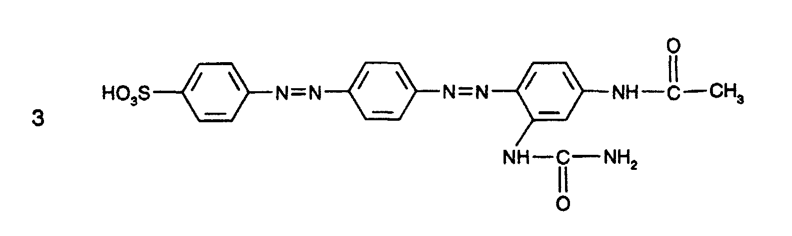

Beispiele 4 bis 6: Verfährt man wie in Beispiel 1 angegeben, verwendet jedoch anstelle des Farbstoffs der Formel (104) eine äquimolare Menge eines der in der folgenden Tabelle 2 in Spalte 2 angegebenen Farbstoffe, so erhält man ebenfalls in einem beige-braunen Farbton gefärbtes Polyamidgewebe.

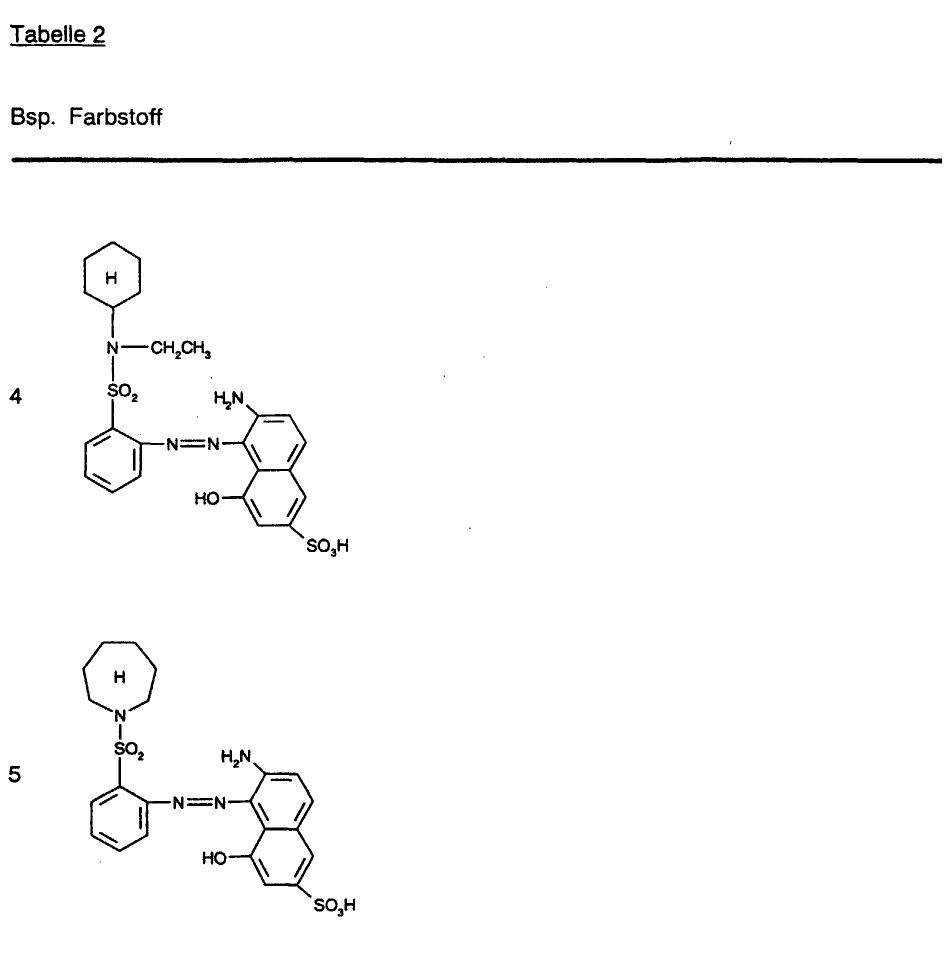

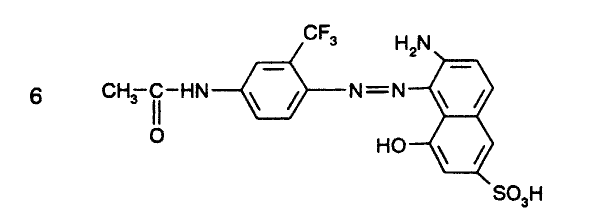

Beispiele 7 und 8: Verfährt man wie in Beispiel 1 angegeben, verwendet jedoch anstelle des Farbstoffs der Formel (106) eine äquimolare Menge eines der in der folgenden Tabelle 3 in Spalte 2 angegebenen Farbstoffe, so erhält man ebenfalls in einem beige-braunen Farbton gefärbtes Polyamidgewebe.

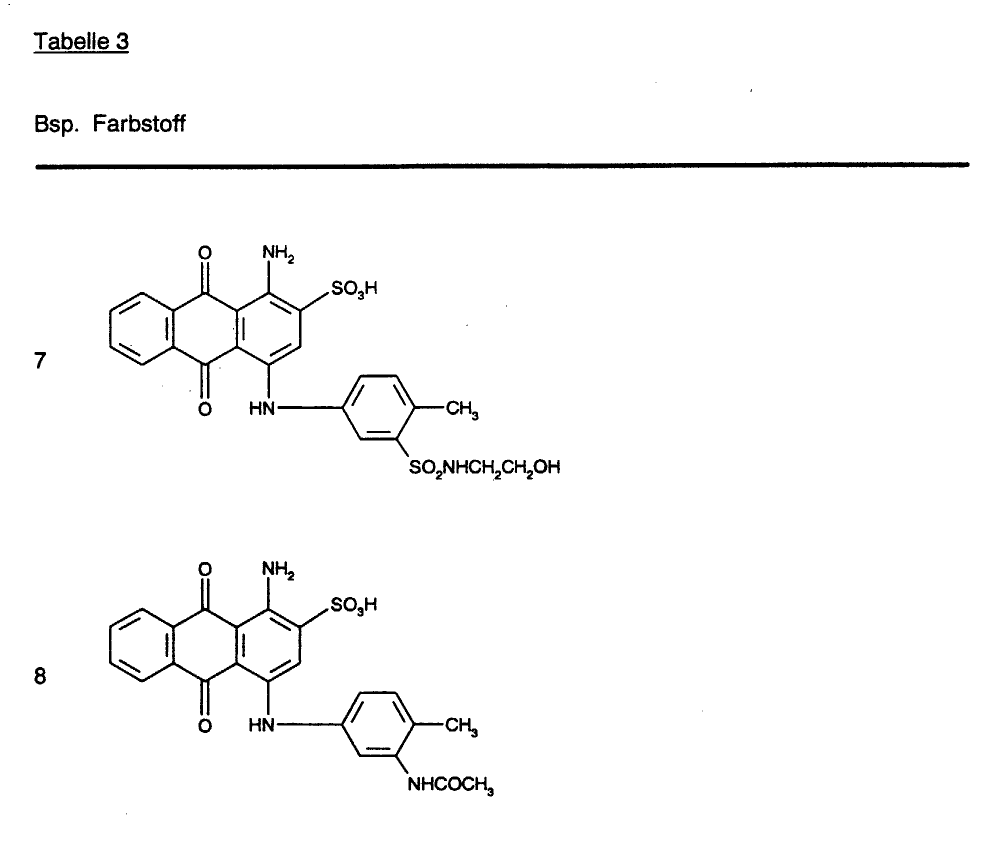

Beispiele 9 bis 13: Verfährt man wie in Beispiel 1 angegeben, verwendet jedoch anstelle des Farbstoffs der Formel (105) eine äquimolare Menge eines der in der folgenden Tabelle 4 in Spalte 2 angegebenen Farbstoffe, so erhält man ebenfalls in einem beige-braunen Farbton gefärbtes Polyamidgewebe.

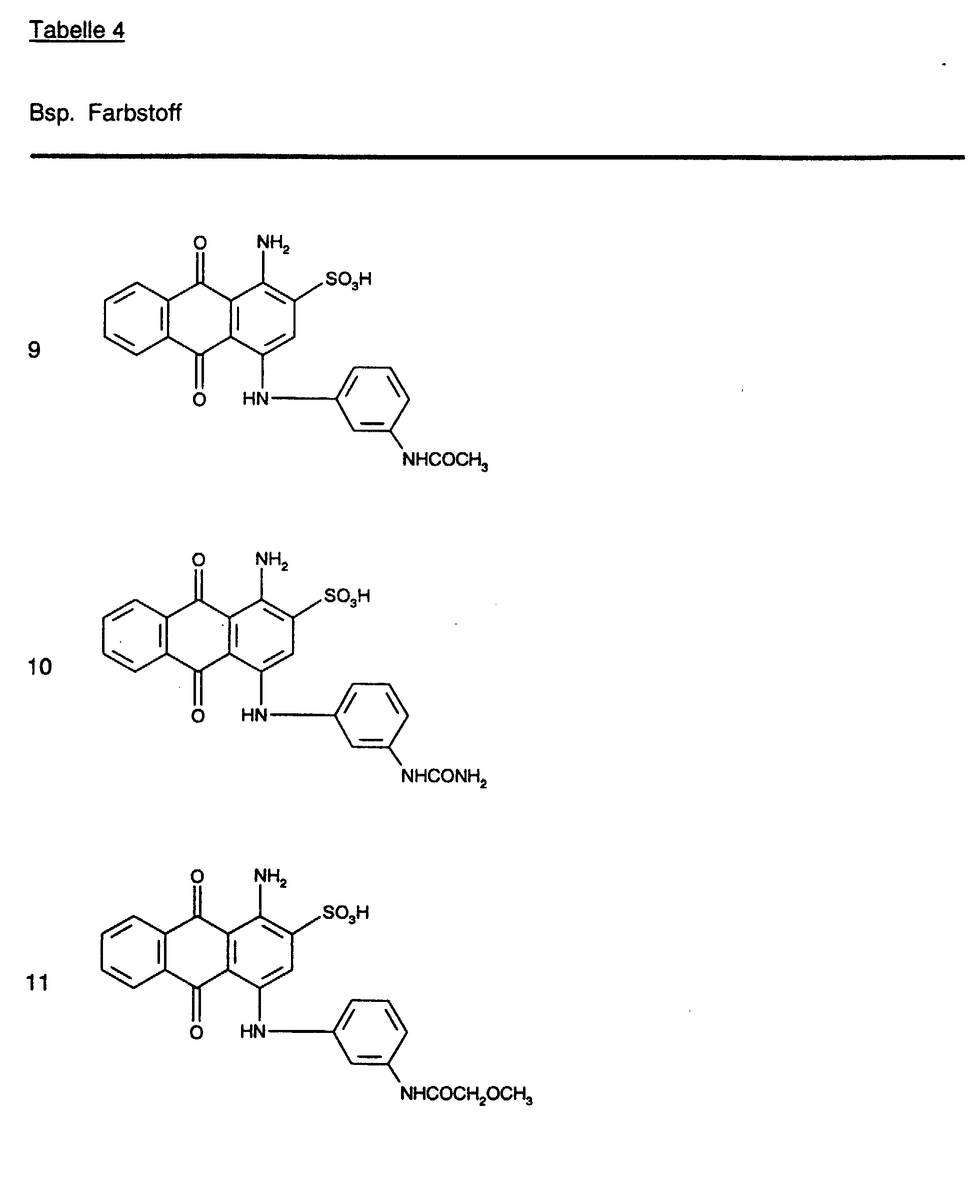

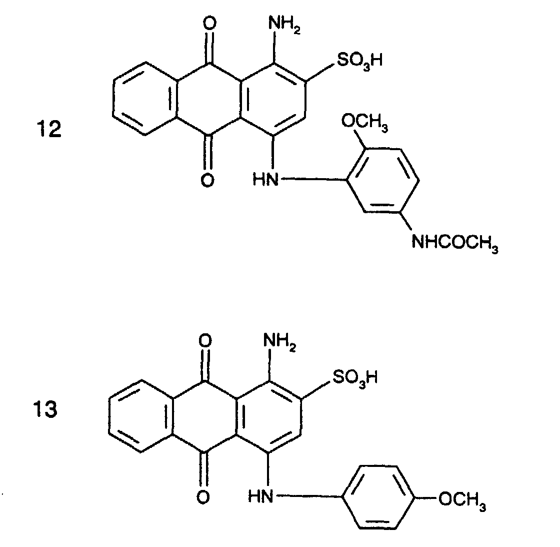

Beispiele 14 bis 26: Verfährt man wie in den Beispielen 1 bis 13 angegeben, verwendet jedoch anstelle der Farbstoffe der Formeln (101) und (102) 0,032 Teile des Farbstoffs der Formel (101), so erhält man ebenfalls in einem beige-braunen Farbton gefärbtes Polyamidgewebe.

## Patentansprüche

1. Verfahren zum Trichromie-Färben oder -Bedrucken von natürlichem oder synthetischem Polyamidfasermaterial, dadurch gekennzeichnet, dass man
mindestens einen gelb- oder orangefärbenden Farbstoff der Formel (1) 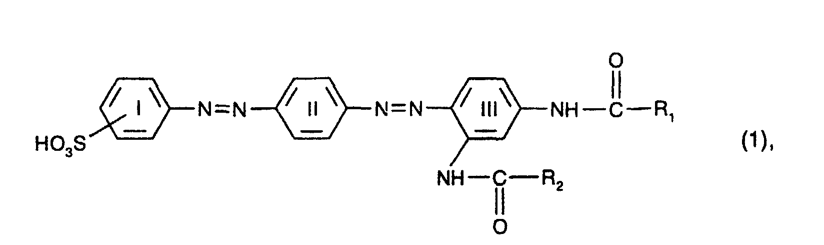 worin
R₁ und R₂ unabhängig voneinander gegebenenfalls durch Hydroxy, C₁-C₄-Alkoxy oder Halogen substituiertes C₁-C₄-Alkyl oder C₁-C₄-Alkoxy;
gegebenenfalls durch C₁-C₄-Alkyl, C₁-C₄-Alkoxy oder Halogen substituiertes Phenyl oder Phenoxy; oder
ein Rest der Formel -N(R₃)R₄ sind, wobei R₃ und R₄ unabhängig voneinander Wasserstoff, C₁-C₄-Alkyl oder gegebenenfalls im Alkylteil durch Hydroxy oder C₁-C₄-Alkoxy weitersubstituiertes C₂-C₄-Alkanoyl sind; und
die Benzolringe I, II und III der Farbstoffe der Formel (1) gegebenenfalls durch C₁-C₄-Alkyl, C₁-C₄-Alkoxy, C₂-C₄-Alkanoylamino, Ureido oder Halogen weitersubstituiert sind;
zusammen mit mindestens einem roffärbenden Farbstoff der Formeln (2) und (3) 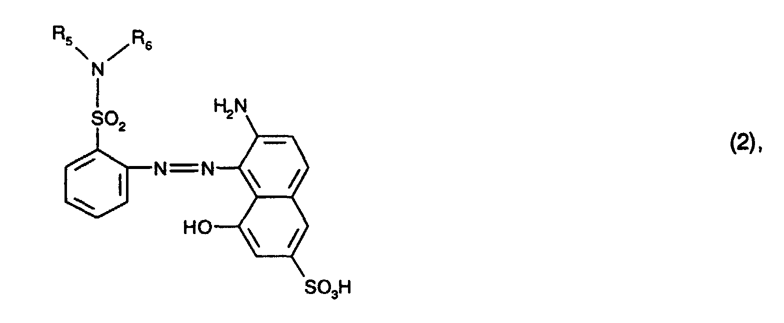 worin R₅ C₁-C₆-Alkyl, Phenyl oder Cyclohexyl und R₆ C₁-C₆-Alkyl ist, oder
die Reste R₅ und R₆ zusammen mit dem sie verbindenden Stickstoffatom einen Azepinylring bilden, 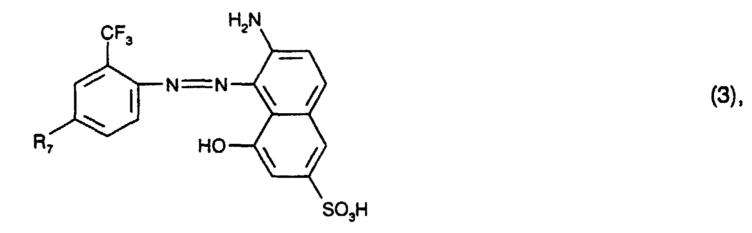 worin R₇ Wasserstoff, Halogen oder C₂-C₄-Alkanoylamino bedeutet;
und zusammen mit mindestens einem der blaufärbenden Farbstoffe der Formeln (4), (5) und (6) 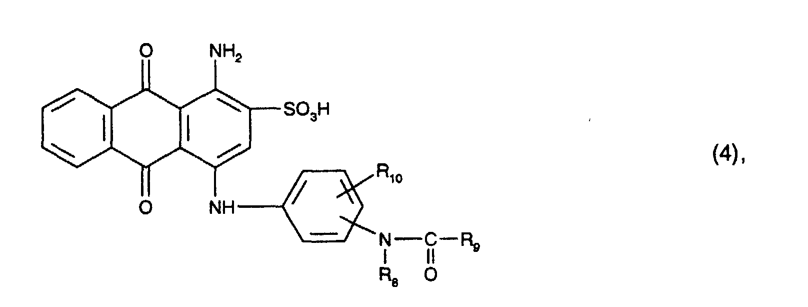 worin R₈ Wasserstoff oder C₁-C₄-Alkyl ist und
R₉ gegebenenfalls durch Hydroxy, C₁-C₄-Alkoxy oder Halogen substituiertes C₁-C₄-Alkyl oder C₁-C₄-Alkoxy; oder Amino bedeutet und
R₁₀ Wasserstoff, C₁-C₄-Alkyl oder C₁-C₄-Alkoxy ist, 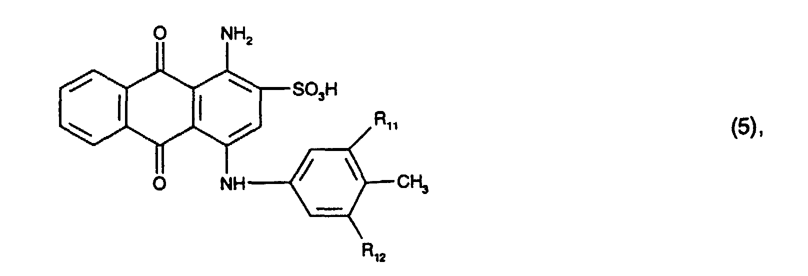 worin R₁₁ Wasserstoff oder Methyl ist und R₁₂ ein C₂₋₄-Hydroxyalkylsulphamoylrest bedeutet, 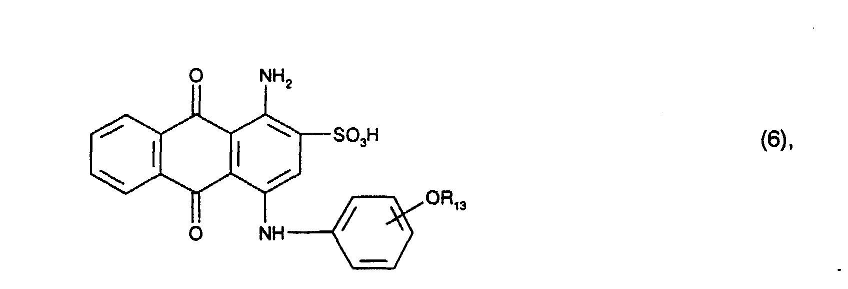
worin R₁₃ C₁-C₄-Alkyl ist;
verwendet.

2. Verfahren gemäss Anspruch 1, dadurch gekennzeichnet, dass man
als Farbstoff der Formel (1) einen Farbstoff der Formel 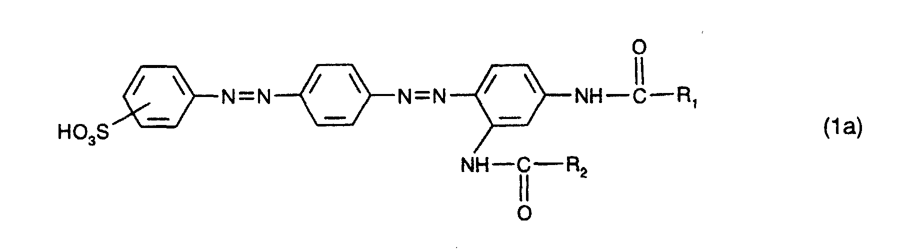 verwendet, worin R₁ und R₂ die in Anspruch 1 angegebenen Bedeutungen haben.

3. Verfahren gemäss einem der Ansprüche 1 und 2, dadurch gekennzeichnet, dass
R₁ und R₂ unabhängig voneinander gegebenenfalls durch Hydroxy, C₁-C₄-Alkoxy oder Halogen substituiertes C₁-C₄-Alkyl oder C₁-C₄-Alkoxy; oder
ein Rest der Formel -N(R₃)R₄ sind, wobei R₃ Wasserstoff und R₄ Wasserstoff oder im Alkylteil gegebenenfalls durch C₁-C₄-Alkoxy weitersubstituiertes C₂-C₄-Alkanoyl ist.

4. Verfahren gemäss einem der Ansprüche 1 bis 3, dadurch gekennzeichnet, dass
R₁ und R₂ unabhängig voneinander C₁-C₄-Alkoxy; gegebenenfalls durch C₁-C₄-Alkoxy substituiertes C₁-C₄-Alkyl; oder Amino sind.

5. Verfahren gemäss einem der Ansprüche 1 bis 4, dadurch gekennzeichnet, dass R₁ C₁-C₄-Alkoxy ist.

6. Verfahren gemäss einem der Ansprüche 1 bis 5, dadurch gekennzeichnet, dass man als gelb- oder orangefärbende Farbstoffe eine Farbstoffmischung aus mindestens einem gelb- oder orangefärbenden Farbstoff der Formel (1) und mindestens einem gelb- oder orangefärbenden Farbstoff der Formel (7) 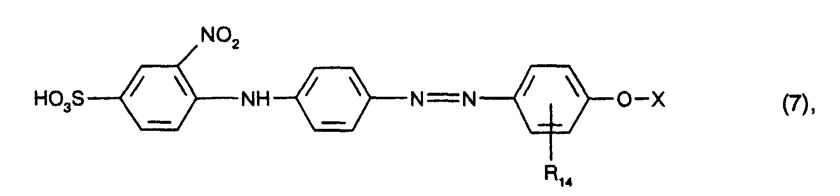 worin
R₁₄ Wasserstoff, C₁-C₄-Alkyl, C₁-C₄-Alkoxy oder Halogen und
X Wasserstoff oder C₁-C₄-Alkyl ist,
verwendet.

7. Verfahren gemäss Anspruch 6, dadurch gekennzeichnet, dass
R₁₄ Wasserstoff oder C₁-C₄-Alkyl und
X Wasserstoff ist.

8. Verfahren gemäss einem der Ansprüche 1 bis 7, dadurch gekennzeichnet, dass man als roffärbenden Farbstoff einen Farbstoff der Formel (2) verwendet, worin R₅ Cyclohexyl und R₆ Methyl ist, oder die Reste R₅ und R₆ zusammen mit dem sie verbindenden Stickstoffatom einen Azepinylring bilden.

9. Verfahren gemäss einem der Ansprüche 1 bis 8, dadurch gekennzeichnet, dass man als blaufärbenden Farbstoff einen Farbstoff der Formel (4) oder eine Mischung des Farbstoffs der Formel (4) mit mindestens einem Farbstoff der Formeln (5) und (6), oder eine Mischung des Farbstoffs der Formel (5) mit einem Farbstoff der Formel (6) verwendet, wobei
R₈ Wasserstoff,
R₉ Methyl, Aethyl, Methoxymethyl oder Amino,
R₁₀ Wasserstoff, Methyl oder Methoxy und
R₁₂ ein Rest der Formel -SO₂-NH-CH₂-CH₂-OH und
R₁₃ Methyl oder Aethyl ist.

10. Verfahren gemäss Anspruch 1, dadurch gekennzeichnet, dass man als gelb- oder orangefärbende Farbstoffe eine Farbstoffmischung aus mindestens einem gelb- oder orangefärbenden Farbstoff der Formel (1a) 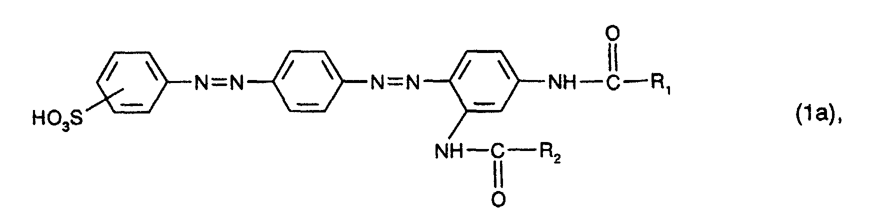 worin
R₁ und R₂ unabhängig voneinander C₁-C₄-Alkoxy; gegebenenfalls durch C₁-C₄-Alkoxy substituiertes C₁-C₄-Alkyl; oder Amino sind, und
mindestens einem gelb- oder orangefärbenden Farbstoff der Formel (7) 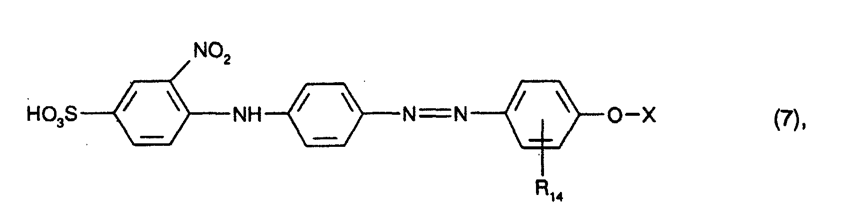 worin
R₁₄ Wasserstoff oder C₁-C₄-Alkyl und X Wasserstoff ist;
als rotfärbenden Farbstoff einen Farbstoff der Formel (2) verwendet, worin
R₅ Cyclohexyl und R₆ Methyl ist, oder die Reste R₅ und R₆ zusammen mit dem sie verbindenden Stickstoffatom einen Azepinylring bilden; und
als blaufärbenden Farbstoff einen Farbstoff der Formel (4) oder eine Mischung des Farbstoffs der Formel (4) mit mindestens einem Farbstoff der Formeln (5) und (6), oder eine Mischung des Farbstoffs der Formel (5) mit einem Farbstoff der Formel (6) verwendet,
wobei
R₈ Wasserstoff,
R₉ Methyl, Aethyl, Methoxymethyl oder Amino,
R₁₀ Wasserstoff, Methyl oder Methoxy und
R₁₂ ein Rest der Formel -SO₂-NH-CH₂-CH₂-OH und
R₁₃ Methyl oder Aethyl ist.

11. Verfahren gemäss einem der Ansprüche 6, 7 und 10, dadurch gekennzeichnet, dass man als gelb- oder orangefärbende Farbstoffe der Formel (7) eine Mischung der Farbstoffe der Formeln 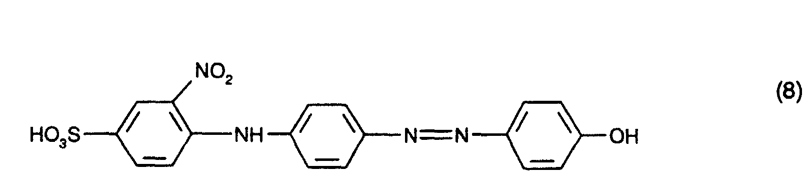 und 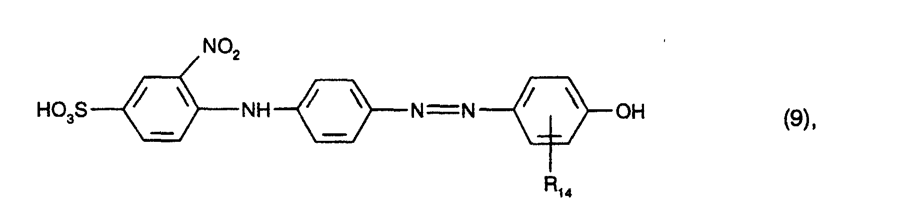 worin R₁₄ Methyl bedeutet, verwendet.

12. Verfahren gemäss einem der Ansprüche 1 bis 11, dadurch gekennzeichnet, dass man als blaufärbende Farbstoffe eine Mischung des Farbstoffs der Formel (4) mit einem Farbstoff der Formel (5) verwendet, wobei
R₈ Wasserstoff,
R₉ Methyl, Aethyl, Methoxymethyl oder Amino,
R₁₀ Wasserstoff, Methyl oder Methoxy und
R₁₂ ein Rest der Formel -SO₂-NH-CH₂-CH₂-OH ist.

13. Verfahren gemäss einem der Ansprüche 1 bis 12, dadurch gekennzeichnet, dass man als rotfärbenden Farbstoff einen Farbstoff der Formel (2) verwendet, worin
R₅ Cyclohexyl und R₆ Methyl ist.

14. Verfahren gemäss einem der Ansprüche 1 bis 13, dadurch gekennzeichnet, dass man
Wolle oder synthetisches Polyamidfasermaterial färbt oder bedruckt.

15. Verfahren gemäss Anspruch 14, dadurch gekennzeichnet, dass man
synthetisches Polyamidfasermaterial färbt oder bedruckt.

16. Farbstoffmischungen, dadurch gekennzeichnet, dass sie
mindestens einen gelb- oder orangefärbenden Farbstoff der Formel (1) 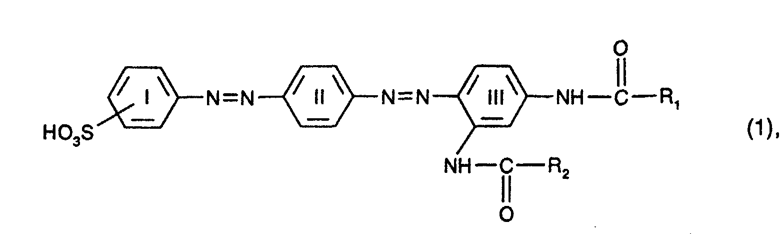 worin
R₁ und R₂ unabhängig voneinander gegebenenfalls durch Hydroxy, C₁-C₄-Alkoxy oder Halogen substituiertes C₁-C₄-Alkyl oder C₁-C₄-Alkoxy;
gegebenenfalls durch C₁-C₄-Alkyl, C₁-C₄-Alkoxy oder Halogen substituiertes Phenyl oder Phenoxy; oder
ein Rest der Formel -N(R₃)R₄ sind, wobei R₃ und R₄ unabhängig voneinander Wasserstoff, C₁-C₄-Alkyl oder gegebenenfalls im Alkylteil durch Hydroxy oder C₁-C₄-Alkoxy weitersubstituiertes C₂-C₄-Alkanoyl sind; und
die Benzolringe I, II und III der Farbstoffe der Formel (1) gegebenenfalls durch C₁-C₄-Alkyl, C₁-C₄-Alkoxy, C₂-C₄-Alkanoylamino, Ureido oder Halogen weitersubstituiert sind;
zusammen mit mindestens einem gelb- oder orangefärbenden Farbstoff der Formel (7) 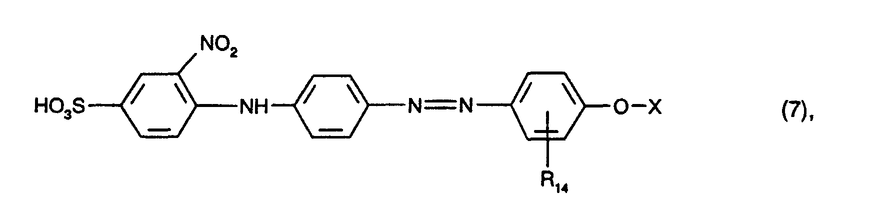 worin
R₁₄ Wasserstoff, C₁-C₄-Alkyl, C₁-C₄-Alkoxy oder Halogen und
X Wasserstoff oder C₁-C₄-Alkyl ist;
enthalten.

17. Farbstoffe der Formel (4) 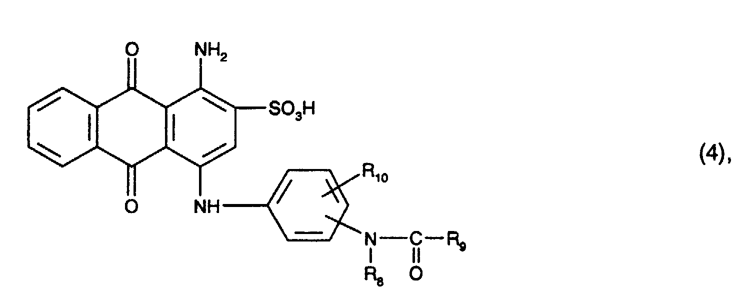 worin
R₈ Wasserstoff oder C₁-C₄-Alkyl und
R₉ durch Hydroxy oder C₁-C₄-Alkoxy substituiertes C₁-C₄-Alkyl oder C₁-C₄-Alkoxy bedeutet und
R₁₀ C₁-C₄-Alkyl oder C₁-C₄-Alkoxy ist.

## Claims

1. A process for dyeing or printing natural or synthetic polyamide fibre material by the trichromatic technique, which comprises using
at least one yellow- or orange-dyeing dye of formula (1) 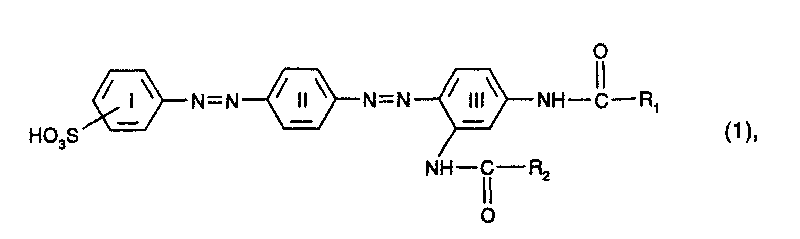 wherein
R₁ and R₂ are each independently of the other C₁-C₄alkyl or C₁-C₄alkoxy, each of which is unsubstituted or substituted by hydroxy, C₁-C₄alkoxy or halogen;
phenyl or phenoxy, each of which is unsubstituted or substituted by C₁-C₄alkyl, C₁-C₄alkoxy or halogen; or
a radical of formula -N(R₃)R₄, wherein R₃ and R₄ are each independently of the other hydrogen, C₁-C₄alkyl, or C₂-C₄alkanoyl which may be further substituted in the alkyl moiety by hydroxy or C₁-C₄alkoxy; and
the benzene rings I, II and III of the dyes of formula (1) may be further substituted by C₁-C₄-alkyl, C₁-C₄alkoxy, C₂-C₄alkanoylamino, ureido or halogen;
together with at least one red-dyeing dye of formulae (2) and (3) 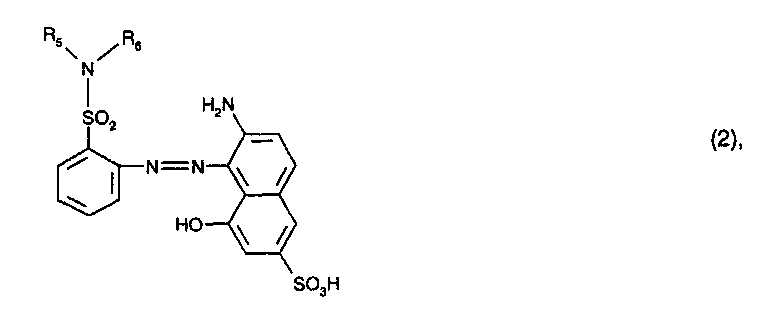 wherein R₅ is C₁-C₆alkyl, phenyl or cyclohexyl, and R₆ is C₁-C₆alkyl, or
R₅ and R₆, together with the linking nitrogen atom, form an azepinyl ring 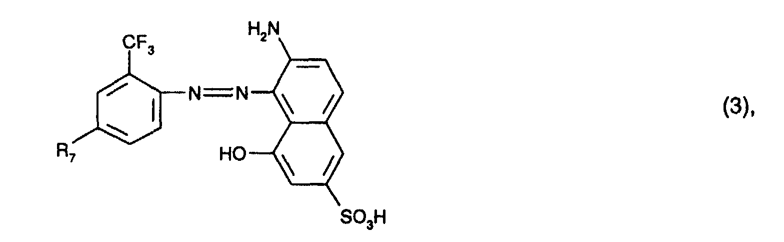 wherein R₇ is hydrogen, halogen or C₂-C₄alkanoylamino;
and together with at least one of the blue-dyeing dyes of formulae (4), (5) and (6) 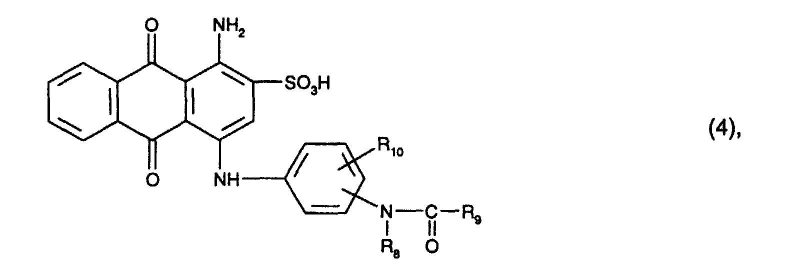 wherein R₈ is hydrogen or C₁-C₄alkyl, and
R₉ is C₁-C₄alkyl or C₁-C₄alkoxy, each of which is unsubstituted or substituted by hydroxy, C₁-C₄alkoxy or halogen; or amino, and
R₁₀ is hydrogen, C₁-C₄alkyl or C₁-C₄alkoxy 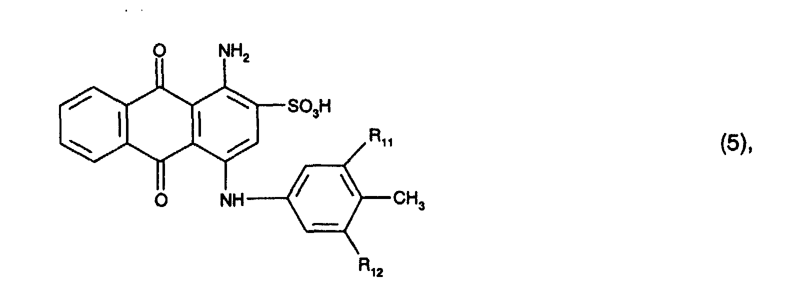 wherein R₁₁ is hydrogen or methyl, and R₁₂ is a C₂₋₄hydroxyalkylsulphamoyl radical 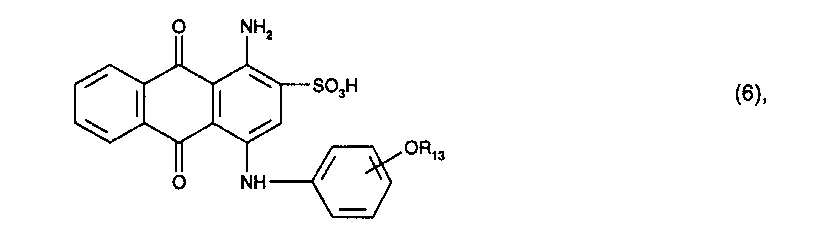 wherein R₁₃ is C₁-C₄alkyl.

2. A process according to claim 1, wherein the dye of formula (1) is a dye of formula 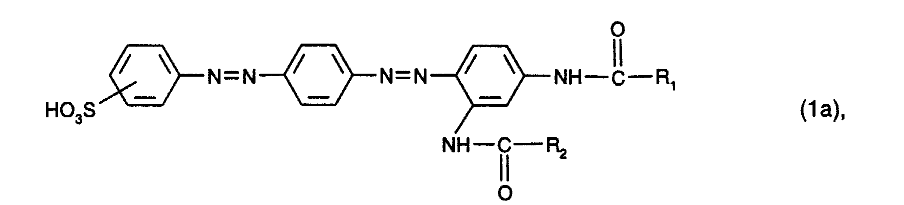 wherein R₁ and R₂ have the meanings claimed in claim 1.

3. A process according to either claim 1 or claim 2, wherein
R₁ and R₂ are each independently of the other C₁-C₄alkyl or C₁-C₄alkoxy, each of which is unsubstituted or substituted by hydroxy, C₁-C₄alkoxy or halogen; or
a radical of formula -N(R₃)R₄, wherein R₃ is hydrogen, and R₄ is hydrogen, or C₂-C₄alkanoyl which may be further substituted in the alkyl moiety by C₁-C₄alkoxy.

4. A process according to any one of claims 1 to 3, wherein
R₁ and R₂ are each independently of the other C₁-C₄alkoxy; unsubstituted or C₁-C₄alkoxy-substituted C₁-C₄alkyl; or amino.

5. A process according to any one of claims 1 to 4, wherein R₁ is C₁-C₄alkoxy.

6. A process according to any one of claims 1 to 5, wherein the yellow- or orange-dyeing dye is a dye mixture consisting of
at least one yellow- or orange-dyeing dye of formula (1), and
at least one yellow- or orange-dyeing dye of formula (7) 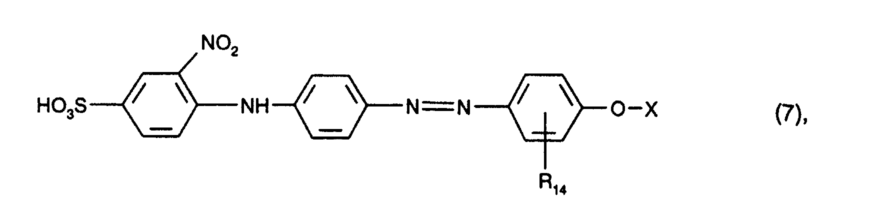 wherein
R₁₄ is hydrogen, C₁-C₄alkyl, C₁-C₄alkoxy or halogen, and
X is hydrogen or C₁-C₄alkyl.

7. A process according to claim 6, wherein
R₁₄ is hydrogen or C₁-C₄alkyl, and
X is hydrogen.

8. A process according to any one of claims 1 to 7, wherein the red-dyeing dye is a dye of formula (2), wherein
R₅ is cyclohexyl and R₆ is methyl, or wherein R₅ and R₆, together with the linking nitrogen atom, form an azepinyl ring.

9. A process according to any one of claims 1 to 8, wherein the blue-dyeing dye is a dye of formula (4) or a mixture of the dye of formula (4) with at least one dye of formulae (5) and (6), or a mixture of the dye of formula (5) with a dye of formula (6), wherein
R₈ is hydrogen,
R₉ is methyl, ethyl, methoxymethyl or amino,
R₁₀ is hydrogen, methyl or methoxy, and
R₁₂ is a radical of formula -SO₂-NH-CH₂-CH₂-OH, and
R₁₃ is methyl or ethyl.

10. A process according to claim 1, wherein the yellow- or orange-dyeing dyes are a dye mixture consisting of
at least one yellow- or orange-dyeing dye of formula (1a) 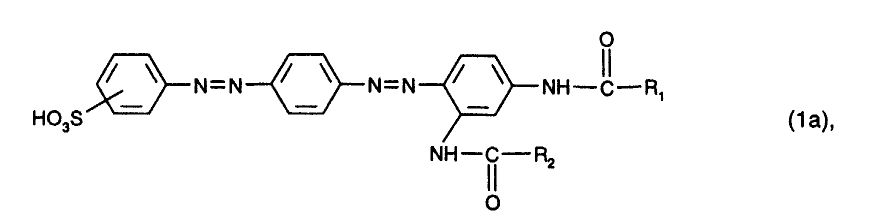 wherein
R₁ and R₂ are each independently of the other C₁-C₄alkoxy; unsubstituted or C₁-C₄alkoxy-substituted C₁-C₄alkyl; or amino, and
at least one yellow- or orange-dyeing dye of formula (7) 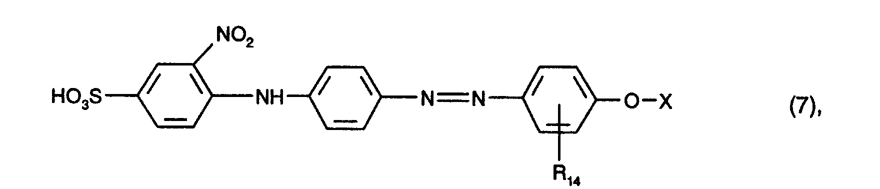 wherein
R₁₄ is hydrogen or C₁-C₄alkyl, and X is hydrogen;
the red-dyeing dye is a dye of formula (2), wherein
R₅ is cyclohexyl and R₆ is methyl, or R₅ and R₆, together with the linking nitrogen atom, form an azepinyl ring; and
the blue-dyeing dye is a dye of formula (4) or a mixture of the dye of formula (4) with at least one dye of formulae (5) and (6), or a mixture of the dye of formula (5) with a dye of formula (6), wherein
R₈ is hydrogen,
R₉ is methyl, ethyl, methoxymethyl or amino,
R₁₀ is hydrogen, methyl or methoxy, and
R₁₂ is a radical of formula -SO₂-NH-CH₂-CH₂-OH, and
R₁₃ is methyl or ethyl.

11. A process according to any one of claims 6, 7 and 10, wherein the yellow- or orange-dyeing dyes of formula (7) are a mixture of the dyes of formulae 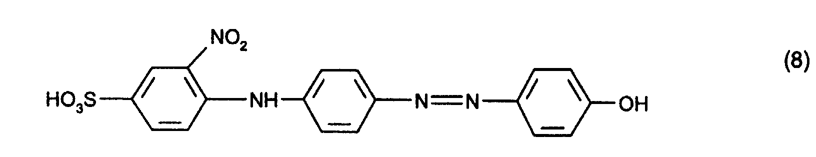 and 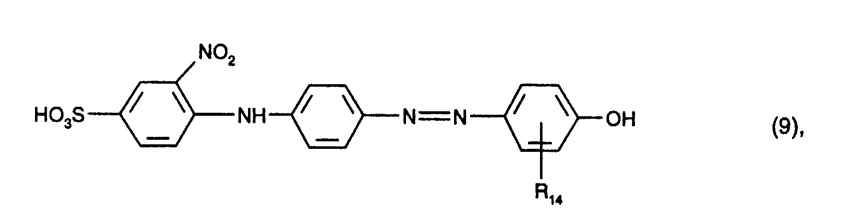 wherein R₁₄ is methyl.

12. A process according to any one of claims 1 to 11, wherein the blue-dyeing dye is a mixture of the dye of formula (4) with a dye of formula (5), wherein
R₈ is hydrogen,
R₉ is methyl, ethyl, methoxymethyl or amino,
R₁₀ is hydrogen, methyl or methoxy, and
R₁₂ is a radical of formula -SO₂-NH-CH₂-CH₂-OH.

13. A process according to any one of claims 1 to 12, wherein the red-dyeing dye is a dye of formula (2), wherein
R₅ is cyclohexyl, and R₆ is methyl.

14. A process according to any one of claims 1 to 13, which comprises dyeing or printing wool or synthetic polyamide fibre material.

15. A process according to claim 14, which comprises dyeing or printing synthetic polyamide fibre material.

16. A dye mixture, comprising
at least one yellow- or orange-dyeing dye of formula (1) 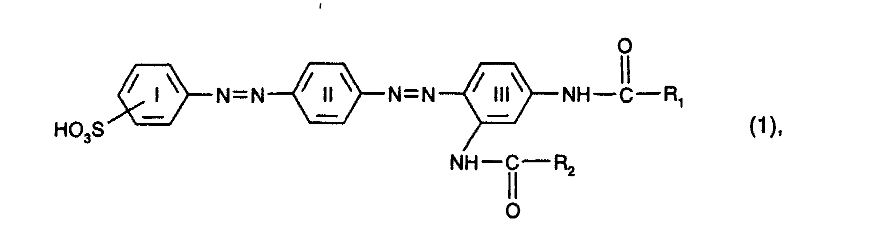 wherein
R₁ and R₂ are each independently of the other C₁-C₄alkyl or C₁-C₄alkoxy, each of which is unsubstituted or substituted by hydroxy, C₁-C₄alkoxy or halogen;
phenyl or phenoxy, each of which is unsubstituted or substituted by C₁-C₄alkyl, C₁-C₄alkoxy or halogen; or
a radical of formula -N(R₃)R₄, wherein R₃ and R₄ are each independently of the other hydrogen, C₁-C₄alkyl, or C₂-C₄alkanoyl which may be further substituted in the alkyl moiety by hydroxy or C₁-C₄alkoxy; and
the benzene rings I, II and III of the dyes of formula (1) may be further substituted by C₁-C₄-alkyl, C₁-C₄alkoxy, C₂-C₄alkanoylamino, ureido or halogen;
together with at least one yellow- or orange-dyeing dye of formula (7) 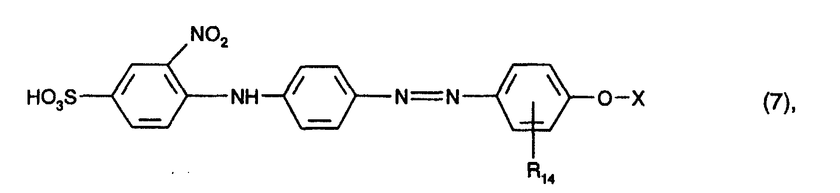 wherein
R₁₄ is hydrogen, C₁-C₄alkyl, C₁-C₄alkoxy or halogen, and
X is hydrogen or C₁-C₄alkyl.

17. A dye of formula (4) 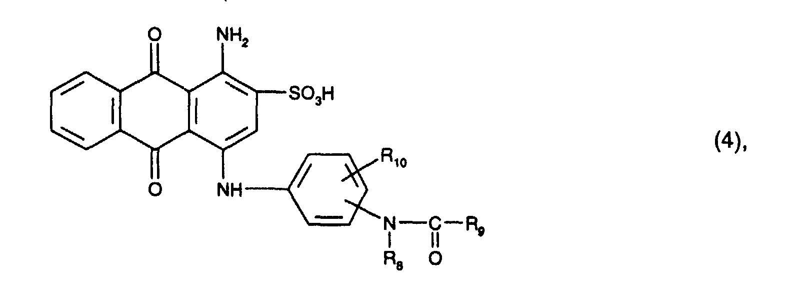
wherein R₈ is hydrogen or C₁-C₄alkyl, and
R₉ is C₁-C₄alkyl or C₁-C₄alkoxy, each of which is unsubstituted or substituted by hydroxy or C₁-C₄alkoxy, and
R₁₀ is C₁-C₄alkyl or C₁-C₄alkoxy.

## Revendications

1. Procédé pour la teinture ou l'impression par trichromie de matières de fibres polyamide naturelles ou synthétiques, caractérisé en ce qu'on utilise
au moins un colorant jaune ou orange de formule 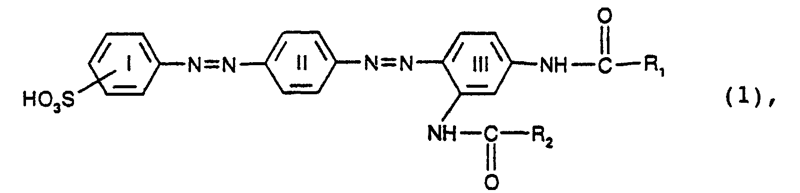 où
R₁ et R₂ représentent, indépendamment l'un de l'autre, des groupes alkoxy en C₁-C₄ ou alkyle en C₁-C₄ éventuellement substitué par des substituants hydroxy, alkoxy en C₁-C₄ ou halogènes ;
phénoxy ou phényle éventuellement substitué par des substituants alkyle en C₁-C₄, alkoxy en C₁-C₄ ou halogène ; ou
un reste de formule -N(R₃)R₄, R₃ et R₄ représentant, indépendamment l'un de l'autre, des atomes d'hydrogène, des groupes alkyle en C₁-C₄ ou alcanoyle en C₂-C₄ éventuellement substitué encore dans le fragment alkyle par des substituants hydroxy ou alkoxy en C₁-C₄ ; et
les cycles benzéniques I, II et III des colorants de formule (1) sont éventuellement substitués de plus par des substituants alkyle en C₁-C₄, alkoxy en C₁-C₄, (alcanoyl en C₁-C₄)amino, uréido ou halogène ;
conjointement avec au moins un colorant rouge de formules (2) et (3) 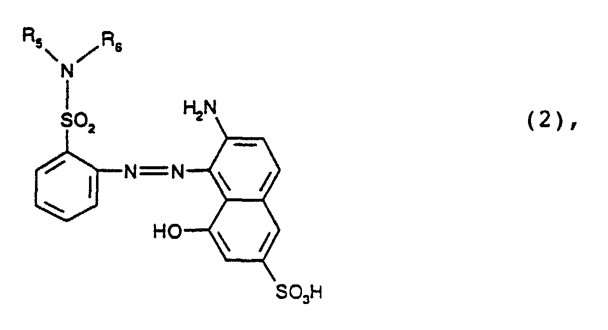 où
R₅ représente des groupes alkyle en C₁-C₆, phényle ou cyclohexyle, et
R₆ représente un groupe alkyle en C₁-C₆, ou les restes R₅ et R₆ forment, ensemble avec l'atome d'azote les reliant, un cycle azépinyle, 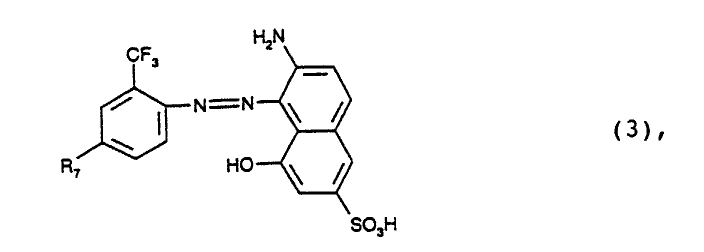
où
R₇ représente un atome d'hydrogène, un atome d'halogène ou un groupe (alcanoyl en C₂-C₄)amino ;
et ensemble avec au moins l'un des colorants bleus de formules (4), (5) et (6) 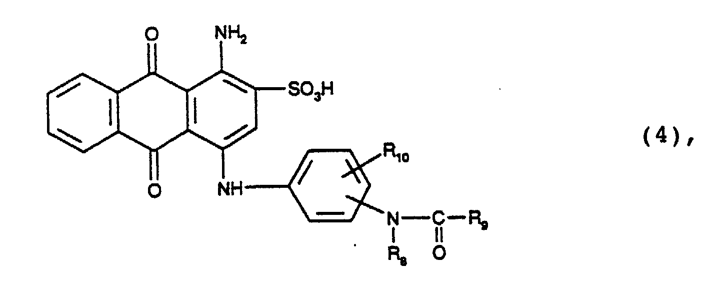 où
R₈ représente un atome d'hydrogène ou un groupe alkyle en C₁-C₄ et
R₉ représente des groupes alkoxy en C₁-C₄ ou alkyle en C₁-C₄ éventuellement substitué par des substituants hydroxy, alkoxy en C₁-C₄ ou halogène ; ou représente un groupe amino et
R₁₀ représente un atome d'hydrogène, des groupes alkyle en C₁-C₄ ou alkoxy en C₁-C₄, 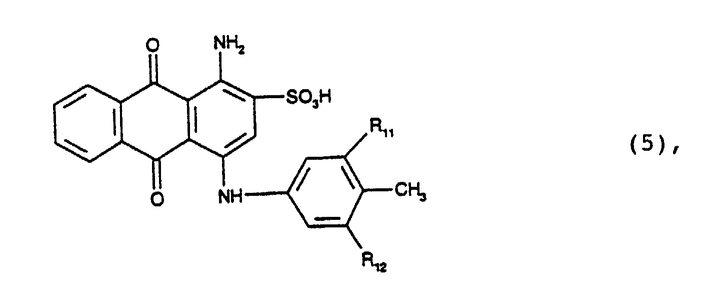
où
R₁₁ représente un atome d'hydrogène ou un groupe méthyle et
R₁₂ représente un reste hydroxy(alkyl en C₂-C₄)-sulfamoyle, 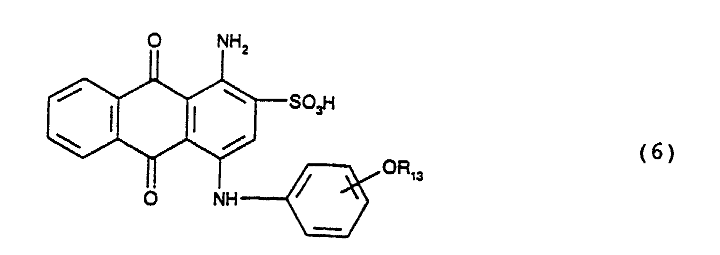
où
R₁₃ représente un groupe alkyle en C₁-C₄.

2. Procédé selon la revendication 1, caractérisé en ce qu'on utilise
en tant que colorant de formule (1), un colorant de formule 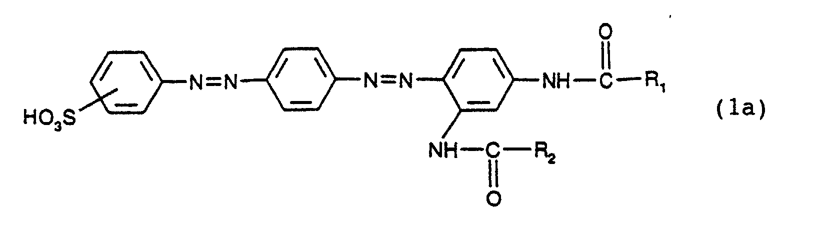 où R₁ et R₂ possèdent les significations données à la revendication 1.

3. Procédé selon l'une des revendications 1 et 2, caractérisé en ce que
R₁ et R₂ représentent, indépendamment l'un de l'autre, des groupes alkoxy en C₁-C₄ ou alkyle en C₁-C₄ éventuellement substitué par des substituants hydroxy, alkoxy en C₁-C₄ ou halogène ; ou
un reste de formule -N(R₃)R₄, R₃ représentant un atome d'hydrogène et R₄ un atome d'hydrogène ou un groupe alcanoyle en C₂-C₄ éventuellement substitué de plus dans le fragment alkyle par un substituant alkoxy en C₁-C₄.

4. Procédé selon l'une des revendications 1 à 3, caractérisé en ce que R₁ et R₂ représentent, indépendamment l'un de l'autre, des groupes alkoxy en C₁-C₄ ; alkyle en C₁-C₄ éventuellement substitué par alkoxy en C₁-C₄ ; ou amino.

5. Procédé selon l'une des revendications 1 à 4, caractérisé en ce R₁ représente un groupe alkoxy en C₁-C₄.

6. Procédé selon l'une des revendications 1 à 5, caractérisé en ce que l'on utilise en tant que colorants jaunes ou orange un mélange de colorants d'au moins un colorant jaune ou orange de formule (1) et d'au moins un colorant jaune ou orange de formule (7) 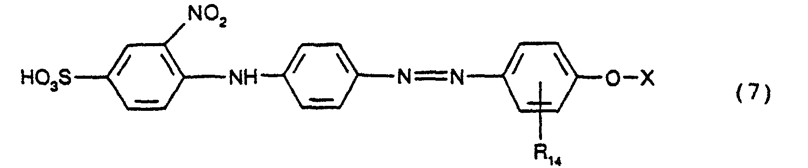 où
R₁₄ représente un atome d'hydrogène, des groupes alkyle en C₁-C₄, alkoxy en C₁-C₄ ou halogène et
X représente un atome d'hydrogène ou un groupe alkyle en C₁-C₄.

7. Procédé selon la revendication 6, caractérisé en ce que
R₁₄ représente un atome d'hydrogène ou un groupe alkyle en C₁-C₄ et
X représente un atome d'hydrogène.

8. Procédé selon l'une des revendications 1 à 7, caractérisé en ce que qu'on utilise comme colorant rouge, un colorant de formule (2), où
R₅ représente un groupe cyclohexyle et R₆ méthyle, ou les restes R₅ et R₆ forment, ensemble avec l'atome d'azote les reliant, un cycle azépinyle.

9. Procédé selon l'une des revendications 1 à 8, caractérisé en ce qu'on utilise en tant que colorant bleu, un colorant de formule (4) ou un mélange du colorant de formule (4) avec au moins un colorant de formules (5) et (6), ou un mélange du colorant de formule (5) avec un colorant de formule (6),
où
R₈ représente un atome d'hydrogène,
R₉ représente des groupe méthyle, éthyle, méthoxyméthyle ou amino,
R₁₀ représente un atome d'hydrogène, des groupes méthyle ou méthoxy et
R₁₂ représente un reste de formule -SO₂-NH-CH₂-CH₂-OH et R₁₃ représente un groupe méthyle ou éthyle.

10. Procédé selon la revendication 1, caractérisé en ce qu'on utilise en tant que colorants jaunes ou orange, un mélange de colorants constitué par au moins un colorant jaune ou orange de formule (1a) 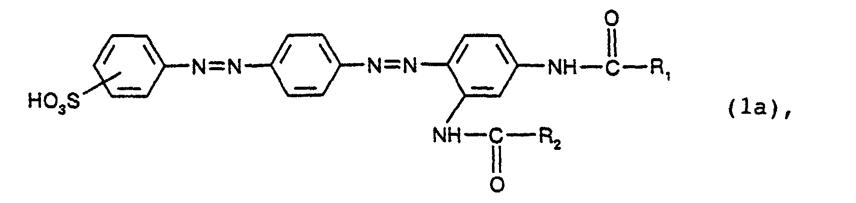 où
R₁ et R₂ représentent, indépendamment l'un de l'autre, un groupe alkoxy en C₁-C₄ ; alkyle en C₁-C₄ éventuellement substitué par alkoxy en C₁-C₄ ; ou amino, et
au moins un colorant jaune ou orange de formule (7) 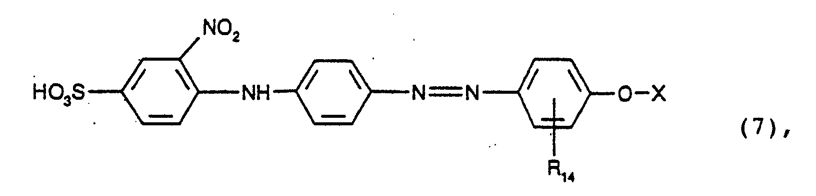 où
R₁₄ représente un atome d'hydrogène ou un groupe alkyle en C₁-C₄ et X représente un atome d'hydrogène ;
en tant que colorant rouge, un colorant de formule (2), où
R₅ représente un groupe cyclohexyle et R₆ représente un groupe méthyle, ou les restes R₅ et R₆ forment, ensemble avec l'atome d'azote les reliant, un cycle azépinyle ; et
en tant que colorant bleu, un colorant de formule (4) ou un mélange du colorant de formule (4) avec au moins un colorant de formules (5) et (6), ou un mélange du colorant de formule (5) avec un colorant de formule (6), où
R₈ représente un atome d'hydrogène,
R₉ représente des groupes méthyle, éthyle ou amino,
R₁₀ représente un atome d'hydrogène, des groupes méthyle ou méthoxy et
R₁₂ représente un reste de formule -SO₂-NH-CH₂-CH₂-OH et
R₁₃ représente un groupe méthyle ou éthyle.

11. Procédé selon l'une des revendications 6, 7 et 10, caractérisé en ce qu'on utilise en tant que colorants jaune ou orange de formule (7), un mélange des colorants de formules 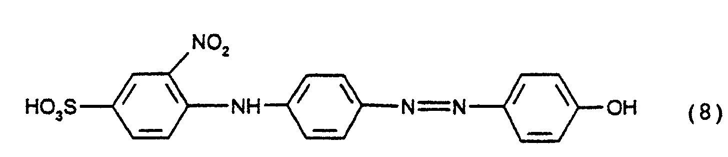 et 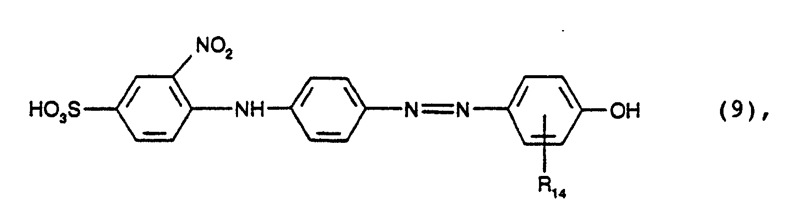 où
R₁₄ représente un groupe méthyle.

12. Procédé selon l'une des revendications 1 à 11, caractérisé en ce qu'on utilise en tant que colorants bleus, un mélange du colorant de formule (4) avec un colorant de formule (5), où
R₈ représente un atome d'hydrogène,
R₉ représente des groupes méthyle, éthyle, méthoxyméthyle ou amino,
R₁₀ représente un atome d'hydrogène, des groupes méthyle ou méthoxy et
R₁₂ représente un reste de formule -SO₂-NH-CH₂-CH₂-OH.

13. Procédé selon l'une des revendications 1 à 12, caractérisé en ce qu'on utilise en tant que colorant rouge, un colorant de formule (2), où
R₅ représente un groupe cyclohexyle et R₆ un groupe méthyle.

14. Procédé selon l'une des revendications 1 à 13, caractérisé en ce qu'on teint ou imprime la laine ou une matière de fibres polyamide synthétiques.

15. Procédé selon la revendication 14, caractérisé en ce qu'on teint ou imprime une matière de fibres polyamide synthétiques.

16. Mélanges de colorants caractérisés en ce qu'ils contiennent
au moins un colorant jaune ou orange de formule (1) 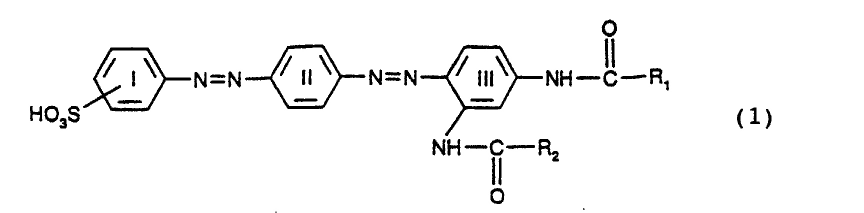 où
R₁ et R₂ représentent, indépendamment l'un de l'autre, des groupes alkoxy en C₁-C₄ ou alkyle en C₁-C₄ éventuellement substitué par des substituants hydroxy, alkoxy en C₁-C₄ ou halogènes ;
phénoxy ou phényle éventuellement substitué par des substituants alkyle en C₁-C₄, alkoxy en C₁-C₄ ou halogène ; ou
un reste de formule -N(R₃)R₄, R₃ et R₄ représentant, indépendamment l'un de l'autre, des atomes d'hydrogène, un alkyle en C₁-C₄ ou alcanoyle en C₂-C₄ éventuellement substitué encore dans le fragment alkyle par des substituants hydroxy ou alkoxy en C₁-C₄ ; et
les cycles benzéniques I, II et III des colorants de formule (1) sont éventuellement substitués de plus par des substituants alkyle en C₁-C₄, alkoxy en C₁-C₄, (alcanoyl en C₁-C₄)amino, uréido ou halogène ; 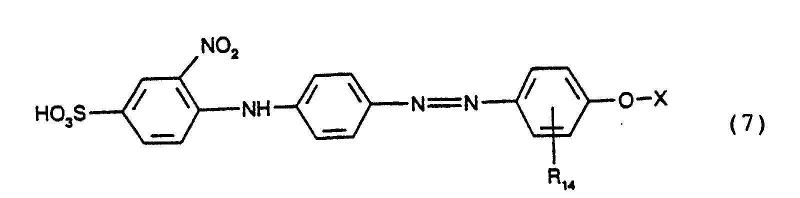
où
R₁₄ représente un atome d'hydrogène, des groupes alkyle en C₁-C₄, alkoxy en C₁-C₄ ou halogène, et
X représente un atome d'hydrogène ou un groupe alkyle en C₁-C₄.

17. Colorants de formule (4) 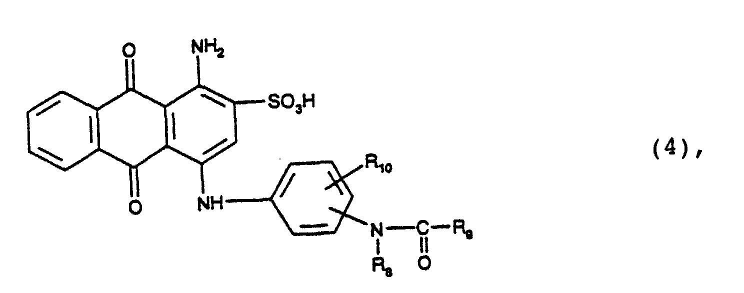 où
R₈ représente un atome d'hydrogène ou un groupe alkyle en C₁-C₄ et
R₉ représente un groupe alkoxy en C₁-C₄ ou alkyle en C₁-C₄ ou éventuellement substitué par un substituant alkoxy en C₁-C₄
et
R₁₀ représente un groupe alkyle en C₁-C₄ ou alkoxy en C₁-C₄.
